# EUROPEAN PATENT APPLICATION

(11) **EP 4 769 047 A2**
(43) Date of publication of application: **01.07.2026**
(21) Application number: 25227042.6
(22) Date of filing: 23.12.2025
(51) Int. Cl.: G05D 1/224, G05D 1/229

(54) **TRAVEL CONTROL SYSTEM, WORK VEHICLE, METHOD OF TRAVEL CONTROL, AND COMPUTER PROGRAM**

(30) Priority: 27.12.2024 JP 2024232136
(71) Applicant: Kubota Corporation, Osaka-shi, Osaka 530-0011 (JP)
(72) Inventor: ASADA, Ryo, SAKAI-SHI, OSAKA, 590-0908 (JP); YOSHIDA, Osamu, SAKAI-SHI, OSAKA, 590-0908 (JP)
(74) Representative: Cabinet Beau de Loménie

(57) **Abstract**

A travel control system for a work vehicle includes a positioning device to output position data concerning a position of the work vehicle, and a controller configured or programmed to control operation of the work vehicle, to operate in a recording mode to record the position data as acquired while the work vehicle travels to a storage device, to operate in a reproducing mode to cause the work vehicle to travel via self-driving by controlling speed and steering of the work vehicle based on the position data recorded in the storage device, and, when a manipulation for beginning recording of the position data to the storage device is performed, to determine whether a start condition for beginning recording of the position data is satisfied or not, and to cause a notifier to output a notification as to whether the start condition is satisfied or not.

## Description

### CROSS REFERENCE TO RELATED APPLICATIONS

This application claims the benefit of priority to Japanese Patent Application No. 2024-232136 filed on December 27, 2024, to which the skilled person can refer when considering the present disclosure.

### BACKGROUND OF THE INVENTION

### 1. Field of the Invention

The present invention relates to travel control systems, work vehicles, methods of travel control, and non-transitory computer-readable media including computer programs.

### 2. Description of the Related Art

As attempts in next-generation agriculture, research and development of smart agriculture utilizing ICT (Information and Communication Technology) and loT (Internet of Things) is under way. Research and development is also directed to the automation and unmanned use of tractors or other work vehicles to be used in the field. For example, work vehicles which travel via automatic steering by utilizing a positioning system that is capable of precise positioning, e.g., a GNSS (Global Navigation Satellite System), are coming into practical use.

International Publication No. 2022/107586 describes a work vehicle that is capable of autonomous movement among a plurality of rows of trees in an orchard, such as a vineyard, by using an SLAM (Simultaneous Localization and Mapping) technique that simultaneously performs localization and map generation. International Publication No. 2022/107586 describes, in an orchard, a work vehicle traveling among a plurality of rows of trees, where the work vehicle performs mowing, preventive pest control, or other work by using an implement (agricultural implement) that is linked to the work vehicle.

### SUMMARY OF THE INVENTION

A work vehicle may iteratively perform the same task while traveling along the same path in a field (e.g., an orchard) in the same manner. In such a case, performing every instance of autonomous travel by, e.g., a SLAM technique will lead to an unwanted increase in the processing load for the autonomous travel.

Efficiently performing iterative operations (including traveling) of a work vehicle is required not only in agricultural machines, but also in work vehicles that are for non-agricultural uses, such as construction vehicles or snowplow vehicles. Furthermore, even in the cases of travel that does not involve work of a work vehicle (e.g., travel outside the field), it is necessary to efficiently carry out any travel that is performed iteratively along the same path.

Example embodiments of the present invention provide travel control systems, work vehicles, and methods of travel control that enable efficient performance of iterative operations (including travel and other operations) of a work vehicle.

According to example embodiments of the present invention, solutions as described in the following Items are provided.

### [Item 1]

A travel control system for a work vehicle, including a positioning device to output position data concerning a position of the work vehicle, and a controller configured or programmed to control operation of the work vehicle, operate in a recording mode to record to a storage device the position data as acquired while the work vehicle travels, operate in a reproducing mode to cause the work vehicle to travel via self-driving by controlling speed and steering of the work vehicle based on the position data recorded in the storage device, and when a manipulation for beginning recording of the position data to the storage device is performed, determine whether a start condition for beginning recording of the position data is satisfied or not, the start condition stipulating that all of a plurality of conditions are satisfied, and cause a notifier to output a notification as to whether the start condition is satisfied or not.

### [Item 2]

The travel control system of Item 1, wherein the notification includes a first notification indicating, when the start condition is determined as satisfied, that the start condition is satisfied.

### [Item 3]

The travel control system of Item 1 or 2, wherein the notification includes a second notification indicating, when the start condition is determined as not satisfied, a condition among the plurality of conditions that is unsatisfied.

### [Item 4]

The travel control system of Item 3, wherein the notifier includes a display device to display the notification, and the controller is configured or programmed to, after causing the second notification to be displayed on the display device, erase the second notification when the unsatisfied condition becomes satisfied.

### [Item 5]

The travel control system of any one of Items 1 to 4, wherein the notification includes a third notification indicating, when the start condition is determined as not satisfied, a manipulation to be performed in order to satisfy a condition among the plurality of conditions that is unsatisfied.

### [Item 6]

The travel control system of Item 5, wherein the notifier includes a display device to display the notification, and the controller is configured or programmed to, after causing the third notification to be displayed on the display device, erase the third notification when the unsatisfied condition becomes satisfied.

### [Item 7]

The travel control system of any one of Items 1 to 6, wherein the plurality of conditions include any two or more of that a roll angle of the work vehicle has a predetermined value or below, that a pitch angle of the work vehicle has a predetermined value or below, that the work vehicle is stopped, that a prime mover of the work vehicle is working, and that reception of a satellite signal by the positioning device is sufficient.

### [Item 8]

The travel control system of any one of Items 1 to 7, wherein the plurality of conditions include that the work vehicle is in a predetermined traveling mode.

### [Item 9]

The travel control system of any one of Items 1 to 8, wherein, in the recording mode, the work vehicle travels along a path connecting a first field and a second field, the notifier includes a display device to display the notification, and the controller is configured or programmed to, prior to the recording mode, cause the display device to display a graphical user interface (GUI) to allow a user to set the first field and the second field.

### [Item 10]

The travel control system of Item 9, wherein the plurality of conditions include that the work vehicle is in a predetermined region within the first field.

### [Item 11]

The travel control system of any one of Items 1 to 10, wherein the work vehicle includes an implement linked thereto and a linkage device to connect the implement and including a PTO shaft to supply motive power to the implement and a three-point hitch to adjust a height of the implement, and the plurality of conditions include one or more of that rotation of the PTO shaft is OFF, and that a height of the three-point hitch has a predetermined value or above.

### [Item 12]

The travel control system of any one of Items 1 to 11, wherein the controller is configured or programmed to, when a manipulation for ending the recording mode is performed by a user, determine whether an end condition for ending the recording mode is satisfied or not, the end condition stipulating that all of a plurality of conditions are satisfied, and cause the notifier to output another notification as to whether the end condition is satisfied or not.

### [Item 13]

The travel control system of Item 12, wherein the another notification includes a fourth notification indicating, when the end condition is determined as satisfied, that the end condition is satisfied.

### [Item 14]

The travel control system of Item 12 or 13, wherein the another notification includes a fifth notification indicating, when the end condition is determined as not satisfied, a condition among the plurality of conditions defining the end condition that is unsatisfied.

### [Item 15]

The travel control system of Item 14, wherein the notifier includes a display device to display the notification, the controller is configured or programmed to, after causing the fifth notification to be displayed on the display device, erase the fifth notification when the unsatisfied condition becomes satisfied.

### [Item 16]

The travel control system of any one of Items 12 to 15, wherein the another notification includes a sixth notification indicating, when the end condition is determined as not satisfied, a manipulation to be performed in order to satisfy a condition among the plurality of conditions defining the end condition that is unsatisfied.

### [Item 17]

The travel control system of Item 16, wherein the notifier includes a display device to display the notification, the controller is configured or programmed to, after causing the sixth notification to be displayed on the display device, erase the sixth notification when the unsatisfied condition becomes satisfied.

### [Item 18]

A work vehicle including the travel control system of any one of Items 1 to 17, a travel device including a wheel responsible for steering, and a driver to drive the travel device, wherein, in the reproducing mode, the controller is configured or programmed to cause the work vehicle to travel via self-driving by controlling the driver based on the position data recorded in the storage device.

### [Item 19]

A method of travel control for a work vehicle, to be executed by a controller configured or programmed to control operation of the work vehicle and operate in a recording mode and a reproducing mode, the method including, in the recording mode, recording position data concerning a position of the work vehicle as acquired while the work vehicle travels to a storage device, in the reproducing mode, causing the work vehicle to travel via self-driving by controlling speed and steering of the work vehicle based on the position data recorded in the storage device, and, when a manipulation for beginning recording of the position data to the storage device is performed, determining whether a start condition for beginning recording of the position data is satisfied or not, the start condition stipulating that all of a plurality of conditions are satisfied, and causing a notifier to output a notification as to whether the start condition is satisfied or not.

### [Item 20]

A non-transitory computer-readable medium including a computer program to be executed by a processor in a controller configured or programmed to control operation of a work vehicle and operate in a recording mode and a reproducing mode, the computer program being executable to cause the processor to perform, in the recording mode, recording position data concerning a position of the work vehicle as acquired while the work vehicle travels to a storage device, in the reproducing mode, causing the work vehicle to travel via self-driving by controlling speed and steering of the work vehicle based on the position data recorded in the storage device, and, when a manipulation for beginning recording of the position data to the storage device is performed, determining whether a start condition for beginning recording of the position data is satisfied or not, the start condition stipulating that all of a plurality of conditions are satisfied, and causing a notifier to output a notification as to whether the start condition is satisfied or not.

### [Item 21]

A controller configured or programmed to perform the method of travel control of Item 19.

### [Item 22]

A non-transitory computer-readable medium including a computer program to be executed by a computer configured or programmed to control operation of a work vehicle, wherein the computer program is executable to cause the computer to perform steps of the method of travel control of Item 19.

### [Item 23]

A non-transitory computer-readable medium including a computer program medium including a computer program to be executed by a computer configured or programmed to control operation of a work vehicle, wherein the computer program is executable to cause the computer to perform the method of travel control of Item 19.

### [Item 24]

A travel control system for a work vehicle, the travel control system including a positioning device to output position data concerning a position of the work vehicle, and the controller of Item 21.

### [Item 25]

A controller configured or programmed to control operation of a work vehicle, operate in a recording mode to record position data concerning a position of the work vehicle as acquired while the work vehicle travels to a storage device, operate in a reproducing mode to cause the work vehicle to travel via self-driving by controlling speed and steering of the work vehicle based on the position data recorded in the storage device, and, when a manipulation for beginning recording of the position data to the storage device is performed, determine whether a start condition for beginning recording of the position data is satisfied or not, the start condition stipulating that all of a plurality of conditions are satisfied, and cause a notifier to output a notification as to whether the start condition is satisfied or not.

### [Item 26]

A travel control system for a work vehicle, the travel control system including a positioning device to output position data concerning a position of the work vehicle, and the controller of Item 25.

### [Item 27]

A controller including one or more processors, and one or more memories storing a computer program executable by the controller to cause the one or more processors to perform steps of the method of travel control of Item 19.

### [Item 28]

A travel control system including the controller of Item 27, and a first driver to drive a travel device of the work vehicle, wherein, in the reproducing mode, the controller is configured or programmed to cause the work vehicle to travel via self-driving by controlling the first driver based on the position data recorded in the storage device.

Example embodiments of the present invention may be implemented using devices, systems, methods, integrated circuits, computer programs, non-transitory computer-readable storage media, or any combination thereof. The computer-readable storage media may be inclusive of volatile storage media, or non-volatile storage media. The device may include a plurality of devices. In the case where the device includes two or more devices, the two or more devices may be provided within a single apparatus, or divided over two or more separate apparatuses.

According to example embodiments of the present invention, travel control systems, work vehicles, and methods of travel control that enable efficient performance of iterative operations (including travel and other operations) of a work vehicle are provided. The above and other elements, features, steps, characteristics and advantages of the present invention will become more apparent from the following detailed description of the example embodiments with reference to the attached drawings.

### BRIEF DESCRIPTION OF THE DRAWINGS

FIG. **1** is a side view schematically showing an example of a work vehicle according to an example embodiment of the present invention.
FIG. **2** is a block diagram schematically showing an example configuration for a work vehicle and an implement according to an example embodiment of the present invention.
FIG. **3A** is a block diagram showing a schematic example configuration for a travel control system according to an example embodiment of the present invention.
FIG. **3B** is a block diagram showing an example configuration for a controller included in a travel control system according to an example embodiment of the present invention.
FIG. **4** is a schematic diagram showing an example configuration for a travel control system according to an example embodiment of the present invention.
FIG. **5A** is a diagram schematically showing an example of a path to be traveled by a work vehicle according to an example embodiment of the present invention in a recording mode.
FIG. **5B** is a diagram schematically showing a path to be traveled by a work vehicle according to an example embodiment of the present invention in a reproducing mode.
FIG. **6** is a diagram showing an example of waypoint data to be recorded to a storage device.
FIG. **7A** is a flowchart showing an example processing to be performed by the controller in the recording mode.
FIG. **7B** is a flowchart showing an example processing to be performed by the controller in the recording mode.
FIG. **8** is a flowchart showing an example processing to be performed by the controller in the recording mode.
FIG. **9A** shows an example screen image to be displayed on an operation terminal operated by a user.
FIG. **9B** shows an example screen image to be displayed on an operation terminal operated by a user.
FIG. **9C** shows an example screen image to be displayed on an operation terminal operated by a user.
FIG. **9D** shows an example screen image to be displayed on an operation terminal operated by a user.
FIG. **10A** shows an example screen image to be displayed on an operation terminal operated by a user.
FIG. **10B** shows an example screen image to be displayed on an operation terminal operated by a user.
FIG. **10C** shows an example screen image to be displayed on an operation terminal operated by a user.
FIG. **11A** shows an example screen image to be displayed on an operation terminal operated by a user.
FIG. **11B** shows an example screen image to be displayed on an operation terminal operated by a user.
FIG. **11C** shows an example screen image to be displayed on an operation terminal operated by a user.
FIG. **12A** shows an example screen image to be displayed on an operation terminal operated by a user.
FIG. **12B** shows an example screen image to be displayed on an operation terminal operated by a user.
FIG. **12C** shows an example screen image to be displayed on an operation terminal operated by a user.
FIG. **13A** shows an example screen image to be displayed on an operation terminal operated by a user.
FIG. **13B** shows an example screen image to be displayed on an operation terminal operated by a user.
FIG. **13C** shows an example screen image to be displayed on an operation terminal operated by a user.
FIG. **14** is a flowchart showing an example processing to be performed by the controller in the reproducing mode.
FIG. **15** is a schematic diagram for describing an example processing to be performed by the controller.

### DETAILED DESCRIPTION OF THE EXAMPLE EMBODIMENTS

In the present specification, a "work vehicle" means a vehicle for use in performing work in a work area. A "work area" is any place where work may be performed, e.g., a field, a mountain forest, or a construction site. A "field" is any place where agricultural work may be performed, e.g., an orchard, an agricultural field, a paddy field, a cereal farm, or a pasture. A work vehicle can be an agricultural machine such as a tractor, a rice transplanter, a combine, a vehicle for crop management, or a riding mower, or a vehicle for non-agricultural purposes such as a construction vehicle or a snowplow vehicle. A work vehicle may be configured so that an implement (also referred to as a "task device" or a "task apparatus") that is suitable for the content of work can be attached to at least one of its front and its rear. In particular, an implement that is attached to an agricultural tractor may be referred to as an "agricultural implement". Traveling of a work vehicle that occurs while the work vehicle performs work by using an implement may be referred to as "tasked travel". The "operation" of a work vehicle includes not only travel of the work vehicle but also other operations.

"Self-driving" means controlling the travel of a vehicle based on the action of a controller, rather than through manual operation of a driver. During self-driving, not only the travel of the vehicle, but also the task operation (e.g., the operation of the implement) may also be automatically controlled. A vehicle that is traveling via self-driving is said to be "self-traveling". The controller may be configured or programmed to control at least one of steering, adjustment of traveling speed, and starting and stopping of travel as are necessary for the travel of vehicle. In the case of controlling a work vehicle having an implement attached thereto, the controller may be configured or programmed to control operations such as raising or lowering of the implement, starting and stopping of the operation of the implement, and the like. Travel via self-driving includes not only the travel of a vehicle toward a destination along a predetermined path, but also the travel of merely following a target of tracking. A vehicle performing self-driving may operate not only in a self-driving mode but also in a manual driving mode of traveling through manual operation of the driver. Traveling through manual operation of the driver is referred to as "manual traveling". "Manual operation of a driver" includes not only manual operation by a driver on the vehicle, but also remote manipulation by a driver (operator) outside the vehicle. A vehicle performing self-driving may travel partly based on manual operation of the driver. The steering of a vehicle that is based on the action of a controller, rather than manual operation of the driver, is referred to as "automatic steering". A portion or an entirety of the controller may be external to the vehicle. Between the vehicle and a controller that is external to the vehicle, communication of control signals, commands, data, or the like may be performed. A vehicle performing self-driving may autonomously travel while sensing the surrounding environment, without any person being involved in the control of the travel of the vehicle. A vehicle that is capable of autonomous travel can travel in an unmanned manner. During autonomous travel, detection of obstacles and avoidance of obstacles may be performed.

A "crop row" is a row of agricultural items, trees, or other plants that may grow in rows on a field, e.g., an orchard or an agricultural field, or in a forest or the like. In the present specification, a "crop row" encompasses a "row of trees".

Hereinafter, example embodiments of the present invention will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand example embodiments of the present invention, are not intended to limit the scope of claims. In the following description, component elements having identical or similar functions are denoted by identical reference numerals.

The following example embodiments are only exemplary, and the technique according to the present invention is not limited to the following example embodiments. For example, numerical values, shapes, materials, steps, orders of steps, etc., that are indicated in the following example embodiments are only exemplary, and admit of various modifications so long as it makes technological sense. Any one implementation may be combined with another.

Hereinafter, as one example, an example embodiment where the work vehicle is a tractor for use in agricultural work in a field such as an orchard will be described. Without being limited to tractors, the techniques according to example embodiments of the present invention are also applicable to other type of agricultural machines such as a rice transplanter, a combine, a vehicle for crop management, or a riding lawn mower, for example. The techniques according to example embodiments of the present invention are also applicable to vehicles for non-agricultural purposes such as a construction vehicle or a snowplow vehicle. Furthermore, the techniques according to example embodiments of the present invention are applicable to travel of a work vehicle other than in work areas, and also to travel that does not involve any work by the work vehicle.

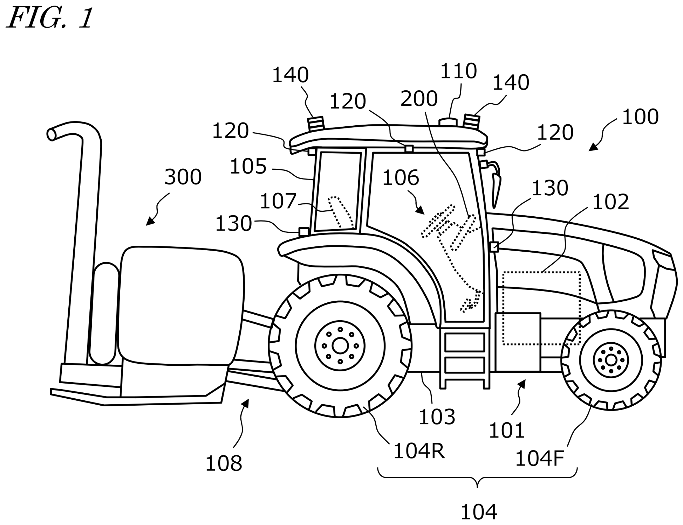

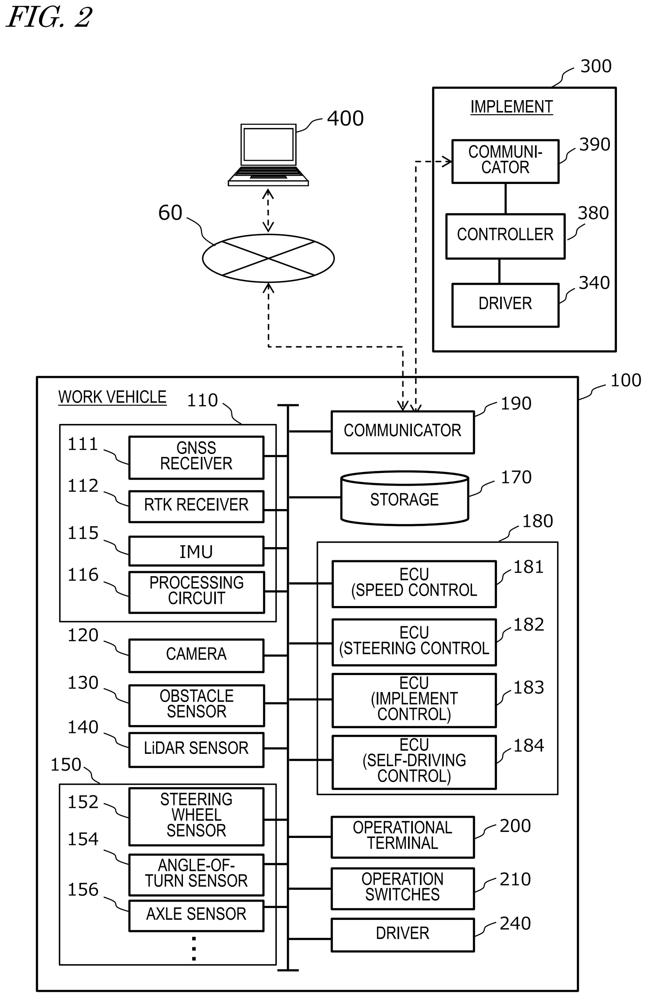

FIG. **1** is a side view schematically showing an example of a work vehicle **100** and an implement **300** that is linked to the work vehicle **100.** FIG. **2** is a block diagram schematically showing an example configuration for the work vehicle **100** and the implement **300.**

As shown in in FIG. **1** and FIG. **2****,** the work vehicle **100** includes a positioning device **110** to output position data concerning the position of the work vehicle **100** (e.g., a GNSS unit), and a controller **180** configured or programmed to control the operation of the work vehicle **100.**

The work vehicle **100** may further include a sensor group **150** to output sensor data concerning the state of the work vehicle **100.** The sensor group **150** includes one or more internal sensors. An "internal sensor" is inclusive of a variety of sensors that detect the state of the work vehicle **100.**

The work vehicle **100** may further include a plurality of external sensors to sense the surroundings of the work vehicle **100.** An "external sensor" is a sensor that senses the external state of the work vehicle. In the example of FIG. **1****,** the external sensors include a plurality of LiDAR sensors **140,** a plurality of cameras **120,** and a plurality of obstacle sensors **130.**

In addition to the positioning device **110,** the cameras **120,** the obstacle sensors **130,** and the LiDAR sensors **140,** the sensor group **150,** a storage device **170,** the controller **180,** and an operation terminal **200,** the work vehicle **100** in the example of FIG. 2 also includes a communicator **190,** operation switches **210,** and a driver **240** (which may be referred to as a "first driver"). These component elements are communicably connected to one another via a bus.

As shown in FIG. **1****,** the work vehicle **100** includes a vehicle body **101,** a prime mover (engine) **102,** and a transmission **103.** On the vehicle body **101,** a travel device, which includes wheels **104** with tires, and a cabin **105** are provided. The travel device includes four wheels **104,** and axles to cause the four wheels to rotate, and braking device (brakes) to brake on each axle. The wheels **104** include a pair of front wheels **104F** and a pair of rear wheels **104R.** Inside the cabin **105,** a driver's seat **107,** a steering device **106,** an operation terminal **200,** and switches for manipulation are provided. The front wheels **104F** and/or the rear wheels **104R** may be replaced by a plurality of wheels with a track (crawlers); rather than wheels with tires, attached thereto.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller included in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point hitch" or a "three-point link"), a PTO (Power Take Off) shaft, a universal joint, and a communication cable. The linkage device **108** allows the implement **300** to be attached to, or detached from, the work vehicle **100.** The linkage device **108** is able to raise or lower the three-point hitch with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **1** is a sprayer to spray a chemical agent onto a crop, the implement **300** is not limited to a sprayer. For example, any arbitrary task device such as a mower, a seeder, a spreader, a rake, a baler, a harvester, a plow, a harrow, or a rotary tiller may be connected to the work vehicle **100** for use.

The positioning device **110** receives satellite signals (also referred to as GNSS signals) that are transmitted from a plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the positioning device 110 in the present example embodiment is located above the cabin **105,** it may be located at any other position.

As shown in FIG. **2****,** the positioning device **110** includes a GNSS receiver **111,** an RTK receiver **112,** and a processing circuit **116.** The positioning device **110** may further include an inertial measurement unit (IMU) **115.**

The GNSS receiver **111** includes an antenna to receive signals from the GNSS satellites, and a processing circuit to determine the position of the work vehicle 100 based on the signals received by the antenna. The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

The positioning device **110** may perform positioning of the work vehicle **100** by utilizing an RTK (Real Time Kinematic)-GNSS. In the positioning based on the RTK-GNSS, not only satellite signals transmitted from a plurality of GNSS satellites, but also a correction signal that is transmitted from a reference station is used. The reference station may be located near the work area where the work vehicle **100** performs tasked travel (e.g., at a position within 10 km of the work vehicle **100).** The reference station generates a correction signal of, for example, an RTCM format based on the satellite signals received from the plurality of GNSS satellites, and transmits the correction signal to the positioning device **110.** The RTK receiver **112,** which includes an antenna and a modem, receives the correction signal transmitted from the reference station. Based on the correction signal, the processing circuit **116** of the positioning device **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The positioning device **110** calculates the position of the work vehicle **100** as frequently as, for example, one to ten times per second. Note that the positioning method is not limited to being performed by using an RTK-GNSS, any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The positioning device **110** according to the present example embodiment may further include the IMU **115.** With the inclusion of the IMU **115,** the positioning device **110** can complement position data by utilizing signals from the IMU. The data acquired by the IMU **115** can be used to complement the position data based on the satellite signals, so as to improve the performance of positioning.

The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** For example, the IMU **115** outputs a signal as frequently as approximately several ten times to several thousand times per second. Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

The sensor group **150** may include various sensors to detect the state of the work vehicle **100** or the implement **300** (i.e., internal sensors). For example, the sensor group **150** may include a steering wheel sensor **152,** an angle-of-turn sensor **154,** and an axle sensor **156.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** may be used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.** Measurement values from the axle sensor **156** can be utilized for the speed control by the controller **180.**

The storage device **170** includes one or more storage media such as a flash memory or a magnetic disc. The storage device **170** stores various data that is generated by the positioning device **110,** the cameras **120,** the obstacle sensors **130,** and the LiDAR sensors **140,** the sensor group **150,** and the controller **180.** The data that is stored by the storage device **170** may include an environment map of the environment where the work vehicle **100** travels, an obstacle map that is consecutively generated during travel, and path data for self-driving. The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** is configured or programmed to control the prime mover **102,** the transmission **103,** and brakes included in the driver **240,** thus controlling the speed of the work vehicle **100.**

The ECU **182** is configured or programmed to control the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** is configured or programmed to control the operations of the three-point hitch, the PTO shaft, and the like that are included in the linkage device **108.** Also, the ECU **183** is configured or programmed to generate a signal to control the operation of the implement **300,** and transmits this signal from the communicator **190** to the implement **300.**

Based on data output from the positioning device **110,** the cameras **120,** the obstacle sensors **130,** and the LiDAR sensors **140,** and the sensor group **150,** the ECU **184** is configured or programmed to perform computation and control for achieving self-driving. For example, the ECU **184** is configured or programmed to estimate the position of the work vehicle **100** based on the data output from at least one of the positioning device **110,** the cameras **120,** and the LiDAR sensors **140.** In a situation where a sufficiently high reception intensity exists for the satellite signals from the GNSS satellites, the ECU **184** may be configured or programmed to determine the position of the work vehicle **100** based only on the data output from the positioning device **110.** On the other hand, in an environment where obstructions, such as trees, that may hinder reception of the satellite signals exist around the work vehicle **100,** e.g., an orchard, the ECU **184** is configured or programmed to estimate the position of the work vehicle **100** by using the data output from the LiDAR sensors **140** or the cameras **120.** During self-driving, the ECU **184** is configured or programmed to perform computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** is configured or programmed to control the prime mover **102,** the transmission **103,** or the brakes to change the speed of the work vehicle **100.** In response to the command to change the steering angle, the ECU **182** is configured or programmed to control the steering device **106** to change the steering angle.

Through the actions of these ECUs, the controller **180** is configured or programmed to realize self-traveling. During self-traveling, the controller **180** is configured or programmed to control the driver **240** based on the measured or estimated position of the work vehicle **100** and on the consecutively-generated target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **184** are illustrated as individual blocks in FIG. **2****,** the function of each of the ECU **181** to **184** may be implemented by a plurality of ECUs. Alternatively, an onboard computer that integrates the functions of at least some of the ECUs **181 to 184** may be provided. The controller **180** may include ECUs other than the ECUs **181 to 184,** and any number of ECUs may be provided in accordance with functionality. Each ECU includes a processing circuit including one or more processors.

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device, which is responsible for remote monitoring, for example. The images may be used to monitor the work vehicle **100** during unmanned driving. The cameras **120** may be provided according to the needs, and any number of them may be provided.

The LiDAR sensors **140** are one example of external sensors that output sensor data indicating a distribution of geographic features around the work vehicle **100.** In the example of FIG. **1****,** two LiDAR sensors **140** are provided on the cabin **105,** at the front and the rear. The LiDAR sensors **140** may be provided at other positions (e.g., on a lower portion of a front face of the vehicle body **101).** While the work vehicle **100** is traveling, each LiDAR sensor **140** repeatedly outputs sensor data representing the distances and directions of measurement points on objects existing in the surrounding environment, or two-dimensional or three-dimensional coordinate values of such measurement points. The number of LiDAR sensors **140** is not limited to two, but may be one, or three or more.

The LiDAR sensors **140** may be configured to output two-dimensional or three-dimensional point cloud data as sensor data. In the present specification, "point cloud data" broadly means data indicating a distribution of multiple reflection points that are observed with the LiDAR sensors **140.** The point cloud data may include coordinate values of each reflection point in a two-dimensional space or a three-dimensional space or information indicating the distance and direction of each reflection point, for example. The point cloud data may include information of luminance of each reflection point. The LiDAR sensors **140** may be configured to repeatedly output point cloud data with a pre-designated cycle, for example. Thus, the external sensors may include one or more LiDAR sensors **140** that output point cloud data as sensor data.

The sensor data that is output from the LiDAR sensors **140** is processed by a controller that controls self-traveling of the work vehicle **100.** During travel of the work vehicle **100,** based on the sensor data that is output from the LiDAR sensors **140,** the controller can be configured or programmed to consecutively generate an obstacle map indicating a distribution of objects existing around the work vehicle **100.** The controller may be configured or programmed to generate an environment map by joining together obstacle maps with the use of an algorithm such as SLAM, for example, during self-traveling. The controller can be configured or programmed to perform estimation of the position and orientation of the work vehicle **100** (i.e., localization) by matching the sensor data against the environment map.

The plurality of obstacle sensors **130** shown in FIG. 1 are provided at the front and the rear of the cabin **105.** The obstacle sensors **130** may be located at other positions. For example, one or more obstacle sensors **130** may be located at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles.

The controller of the work vehicle **100** may be configured or programmed to utilize, for positioning, the sensor data acquired with the sensing devices such as the cameras **120** or the LIDAR sensors **140,** in addition to the results of positioning provided by the positioning device **110.** In the case where geographic features serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensors **140** and on an environment map that is previously stored in the storage device. By correcting or complementing position data based on the satellite signals using the data acquired with the cameras **120** or the LiDAR sensors **140,** it becomes possible to identify the position of the work vehicle **100** with a higher accuracy.

The work vehicle **100** and the implement **300** can communicate with each other via a communication cable that is included in the linkage device **108.** The work vehicle **100** is able to communicate with a terminal device **400** for remote monitoring via a network **60.** The terminal device **400** may be any arbitrary computer, e.g., a personal computer (PC), a laptop computer, a tablet computer, or a smartphone, for example.

The implement **300** includes a driver **340** (which may be referred to as the "second driver"), a driver **340,** a controller **380,** and a communicator **390.** Note that FIG. **2** shows component elements which are relatively closely related to the operations of self-driving by the work vehicle **100,** while other components are omitted from illustration.

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **1****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as a camera(s) to generate images for monitoring purposes. The infrared camera(s) may also be used for detection of obstacles at nighttime.

An obstacle sensor **130** detects objects around the work vehicle **100.** The obstacle sensor **130** may include a laser scanner or an ultrasonic sonar, for example. When an object exists at a position closer to the obstacle sensor **130** than a predetermined distance, the obstacle sensor **130** outputs a signal indicating the presence of an obstacle. A plurality of obstacle sensors **130** may be provided at different positions of the work vehicle **100.** For example, a plurality of laser scanners and a plurality of ultrasonic sonars may be located at different positions of the work vehicle **100.** Providing a multitude of obstacle sensors **130** can reduce blind spots in monitoring obstacles around the work vehicle **100.**

The driver **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The driver **240** may include an electric motor for traction instead of, or in addition to, the internal combustion engine.

The communicator **190** is a device including a circuit to communicate with the implement **300** and the terminal device **400.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **60** with the terminal device **400.** The network **60** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operation terminal **200** is a terminal for the user to perform a manipulation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By manipulating the operation terminal **200,** the user can perform various manipulations, such as, for example, switching ON/OFF the self-driving mode, switching ON/OFF a recording (teaching) mode and a reproducing (playback) mode as will be described below/, and switching ON/OFF the implement **300.** At least some of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** The operation terminal **200** may include a storage device. In place of the storage device **170,** the storage device in the operation terminal **200** may store various data that is necessary for the operation of the work vehicle **100.**

The driver **340** in the implement **300** shown in FIG. **2** performs necessary operations for the implement **300** to perform predetermined tasks. The driver **340** includes a device that is adapted to the use of the implement **300,** e.g., a hydraulic device, an electric motor, or a pump. The controller **380** is configured or programmed to control the operation of the driver **340.** In response to signals that are transmitted from the work vehicle **100** via the communicator **390,** the controller **380** is configured or programmed to cause the driver **340** to perform various operations. Moreover, a signal that is in accordance with the state of the implement **300** may be transmitted from the communicator **390** to the work vehicle **100.**

A travel control system according to an example embodiment of the present invention will be described. The travel control system according to the present example embodiment of the present invention is applicable to the above-described work vehicle **100,** for example. Although the examples of FIG. **1** and FIG. **2** illustrate the implement **300** as being linked to the work vehicle **100,** it is not essentially required for the implement **300** to be linked to the work vehicle **100.** In other words, the travel control system according to the present example embodiment of the present invention is applicable also to the work vehicle **100** without the implement **300** linked thereto.

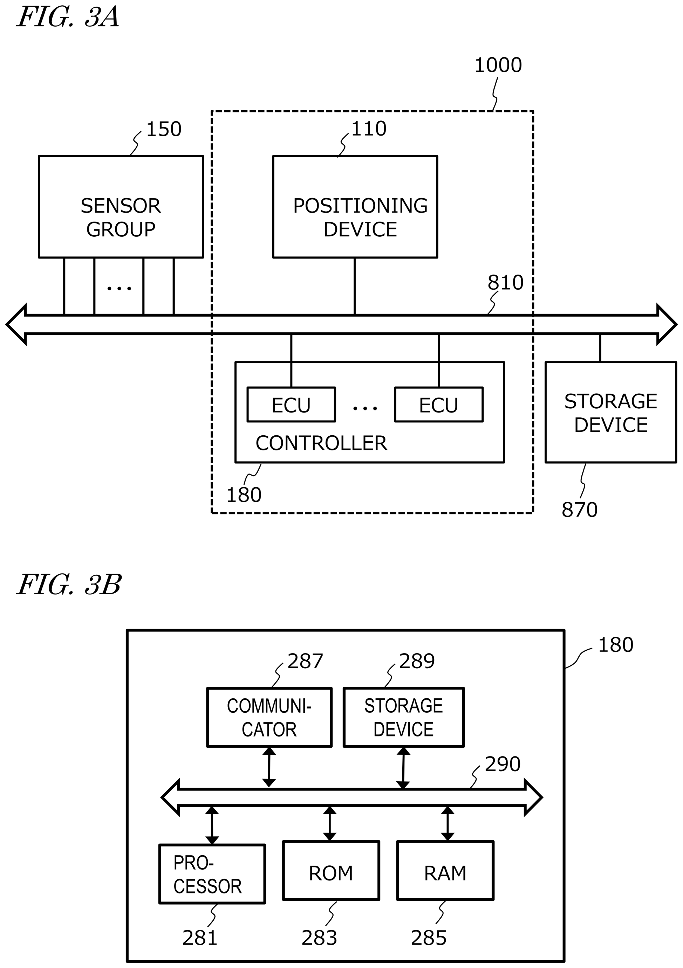

FIG. **3A** is a block diagram showing a schematic example configuration for the travel control system **1000** according to the present example embodiment of the present invention. As shown in FIG. **3A****,** the travel control system **1000** according to the present example embodiment includes a positioning device **110** to detect the position of the work vehicle **100** and output position data, and a controller **180** configured or programmed to control the operation of the work vehicle **100.** In the present example embodiment, as shown in FIG. **2****,** the positioning device **110** and the controller **180** are provided in the work vehicle **100.** Working in cooperation with the positioning device **110,** the controller **180** is configured or programmed to function as the travel control system **1000** of the work vehicle **100.** The controller **180** and the positioning device **110** may be communicably connected to one another via the bus **810.**

FIG. **3A** together shows one or more internal sensors (sensor group) **150** to output sensor data concerning the state of the work vehicle **100.** The sensor group **150** may be included as part of the travel control system **1000,** or be external elements to the travel control system **1000.** In the present example embodiment, as shown in FIG. 2, the sensor group **150** is provided in the work vehicle **100.** The sensor group **150** may be communicably connected to the controller **180** and the positioning device **110** via the bus **810.**

FIG. **3A** also shows a storage device **870,** to which information that is acquired by the controller **180** is recorded. The storage device **870** may be included in the travel control system **1000,** or be an external element to the travel control system **1000.** The storage device **870** may be mounted in the work vehicle **100,** or mounted in the implement **300.** The storage device **870** may be communicably connected to the controller **180** via the **810.** For example, the storage device **870** may be the storage device **170** shown in FIG. 2, or a storage device that is included in the operation terminal **200.** The operation terminal **200** may be included in the travel control system **1000.** The storage device **870** may be located outside of the work vehicle **100** and the implement **300.** When located outside of the work vehicle **100** and the implement **300,** the storage device **870** may be connected to the controller **180** via a communications network. The storage device **870** may be included in a server computer that is connected to the controller **180** via the communications network.

In the example shown in FIG. **1****,** the positioning device **110** is mounted to the work vehicle **100.** However, the positioning device **110** may be mounted to the implement **300** that is linked to the work vehicle **100.** In addition to or instead of the positioning device mounted to the work vehicle **100,** a positioning device (e.g., a GNSS unit) that is mounted to the implement **300** may function as a positioning device **110** of the travel control system **1000.** Strictly speaking, a position that is measured by a positioning device that is mounted to the work vehicle **100** or the implement **300** is the position of a point at which the positioning device exists, but this position is referred to as the "position of the work vehicle" in the present specification.

Without being limited to the steering wheel sensor **152,** the angle-of-turn sensor **154,** and the axle sensor **156** mentioned above, various sensors that are mounted in the work vehicle **100** may be included in the sensor group **150.** For example, the sensor group **150** may include one or more sensors selected from among a temperature sensor, an illuminance sensor, a fuel sensor, a water temperature sensor, an oil level gauge, an engine revolution sensor, a vehicle speed sensor, a battery voltage sensor, a shuttle sensor, a hand accelerator sensor, an accelerator pedal sensor, a main shift lever sensor, a range shift lever sensor, a seat belt sensor, a PM sensor, an acceleration sensor, an angular velocity sensor, an IMU (Inertial Measurement Unit), and a geomagnetic sensor. The sensor group **150** may include a PTO sensor to detect rotation ON/OFF of the PTO shaft and/or a 3P position sensor to detect the position in the height direction (which hereinafter may be simply referred to as "height") of the three-point hitch. Furthermore, in addition to or instead of one or more sensors mounted on the work vehicle **100,** one or more sensors that are mounted on the implement **300** may be included in the sensor group **150** of the travel control system **1000.**

In the example shown in FIG. **3A****,** the controller **180** includes a plurality of ECUs. These ECUs may include the ECUs **181** to **184** illustrated in FIG. **2****,** for example. However, the controller **180** may be a single ECU or other computer. FIG. **3B** is a block diagram showing an example configuration for such a controller **180.** In the example of FIG. **3B****,** the controller **180** includes a processor **281,** a ROM (Read Only Memory) **283,** a RAM (Random Access Memory) **285,** a communicator **287,** and a storage device **289.** These component elements may be connected to one another via a bus **290.**

The processor **281** is a semiconductor integrated circuit, also called a central processing unit (CPU) or a microprocessor. The processor **281** may include a graphics processing unit (GPU). The processor **281** consecutively executes a computer program describing predetermined instructions and being stored in the ROM **283,** and achieves processes that are necessary for the travel control system according to the example embodiment of the present invention. The controller **180** may include a plurality of processors **281.** The plurality of processors **281** may work in cooperation to perform the processes that are necessary for the travel control system according to the present example embodiment of the present invention. A portion or an entirety of the processor **281** may be an FPGA (Field Programmable Gate Array), an ASIC (Application Specific Integrated Circuit), or an ASSP (Application Specific Standard Product) incorporating a CPU.

The communicator **287** is an interface to perform data communications between the controller **180** and an external computer. The communicator **287** is capable of wired communications via a CAN (Controller Area Network) or the like, or wireless communications compliant with the Bluetooth (registered trademark) standards and/or the Wi-Fi (registered trademark) standards.

The storage device **289** can store position data acquired from the positioning device **110,** sensor data acquired from the sensor group **150,** position data and/or sensor data in the middle of processing, data of first information acquired from the position data and second information acquired from the sensor data, and the like. The storage device **289** includes a hard disk drive or a non-volatile semiconductor memory, for example. In this example, the storage device **289** may serve as the storage device **870** in the example of FIG. **3A****.**

The hardware configuration of the controller **180** is not limited to the above example. It is not necessary for a portion or an entirety of the controller **180** to be mounted in the work vehicle **100.** By utilizing the communicator **287,** a computer or computers located outside the work vehicle **100** may be allowed to function as a portion or an entirety of the controller **180.** For example, a computer or computers included in a server computer(s) and/or a terminal device(s) that is connected to a network may function as a portion or an entirety of the controller **180.** On the other hand, a computer or computers that is mounted in the work vehicle **100** may perform all functions required of the controller **180.**

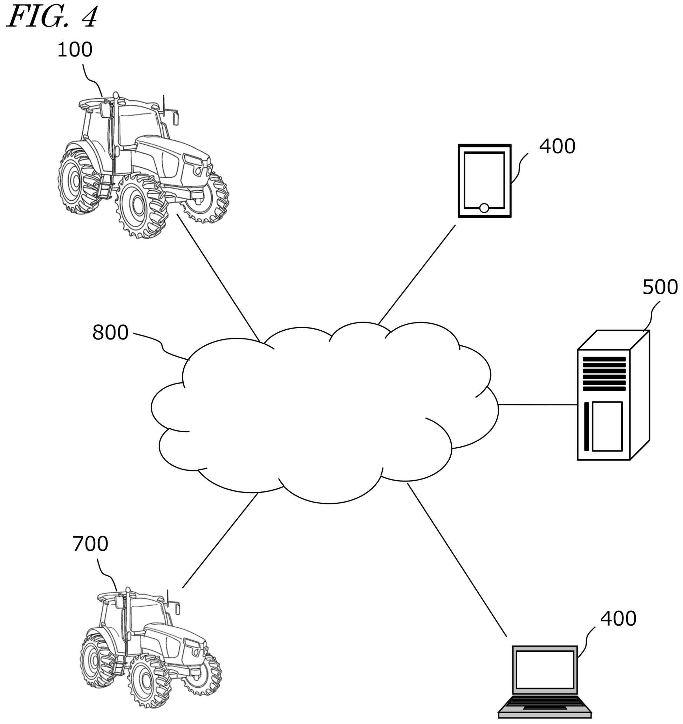

FIG. **4** is a schematic diagram showing another example configuration for a travel control system according to an example embodiment of the present invention. The system shown in FIG. **4** includes the work vehicle **100,** another work vehicle **700,** a server computer **500,** and a plurality of terminal devices **400.** The terminal devices **400** may be either mobile or stationary terminal devices. A portion or an entirety of the functionality of the controller **180** shown in FIG. **3B** may be realized by one or more computers that are connected to the communicator **287** of the controller **180** of the work vehicle **100** via a communications network **800.** Such a computer(s) may be the server computer **500** or the terminal device(s) **400.** This communications network **800** may have the other work vehicle (e.g., agricultural machine) **700** connected thereto. Communication may be performed between the controller **180** of the work vehicle **100** and the other work vehicle **700.** Via the communications network **800,** a portion of the data to be used for the processing by the controller **180** of the work vehicle **100** may be supplied from the other work vehicle **700** to the controller **180.** For example, waypoint data defining a path and a series of operations as generated by the controller of the other work vehicle **700** may be transmitted from the other work vehicle **700** to the controller **180** of the work vehicle **100.** Based on the waypoint data, the controller **180** can perform a playback operation in a reproducing mode as will be described below.

As shown in FIG. **3B****,** an example of the "controller" in an example embodiment of the present invention is a computer that includes at least one processor and at least one memory storing a computer program (code) defining control processes to be executed by the processor. The "controller" may be a computer equipped with an FPGA (Field-Programmable Gate Array), an ASSP (Application Specific Standard Product), an ASIC (Application-Specific Integrated Circuit), or other hardware accelerators configured to execute the control processes.

A "processor" in an example embodiment of the present invention is a hardware electronic circuit such as a CPU (Central Processing Unit), a GPU (Graphics Processing Unit), a DSP (Digital Signal Processor), an ISP (Image Signal Processor), or an NPU (Neural Network Processing Unit). A "memory" is a hardware electronic circuit such as a ROM (Read Only Memory) or a RAM (Random Access Memory). A portion of the memory may be a storage medium that is connected to the processor via interconnects or a network. These hardware electronic circuits may be implemented by one or more integrated circuits (IC) or large-scale integrated circuits (LSI). Each functional unit or block and its associated components within the electronic circuit may be individually manufactured as an individual integrated circuit chip, or a portion or an entirety of these functional units or blocks may be combined so as to be manufactured as a single integrated circuit chip.

A program defining the operation of a processor is designed so that the processor will execute one or more functions, manipulations, steps, or process according to an example embodiment of the present invention.

As will be described below, the travel control system **1000** is capable of controlling the operation of the work vehicle **100** by using a so-called teaching-playback method, which is used in the fields of robot control. The controller **180** of the travel control system **1000** can be configured or programmed to operate in a recording mode and a reproducing mode. The recording mode is a mode in which multiple positions (hereinafter also referred to as "waypoints") defining a path that has been traveled by the work vehicle **100** are recorded. In the recording mode, operations of the work vehicle **100** at the respective waypoints may further be recorded. The reproducing mode is a mode in which the travel path of the work vehicle **100** is reproduced based on the position data of the work vehicle **100** that was recorded in the recording mode. If operations of the work vehicle **100** at the respective waypoints were recorded in the recording mode, the operations of the work vehicle **100** at the respective waypoints may also be reproduced in the reproducing mode. The operations in the recording mode and the reproducing mode correspond to, respectively, an operation of teaching and an operation of playback in the teaching-playback method. The operations of the controller **180** in the recording mode and the reproducing mode may be referred to as "teaching" and "playback", respectively. The recording mode may be referred to as the "teaching mode", and the reproducing mode as the "playback mode".

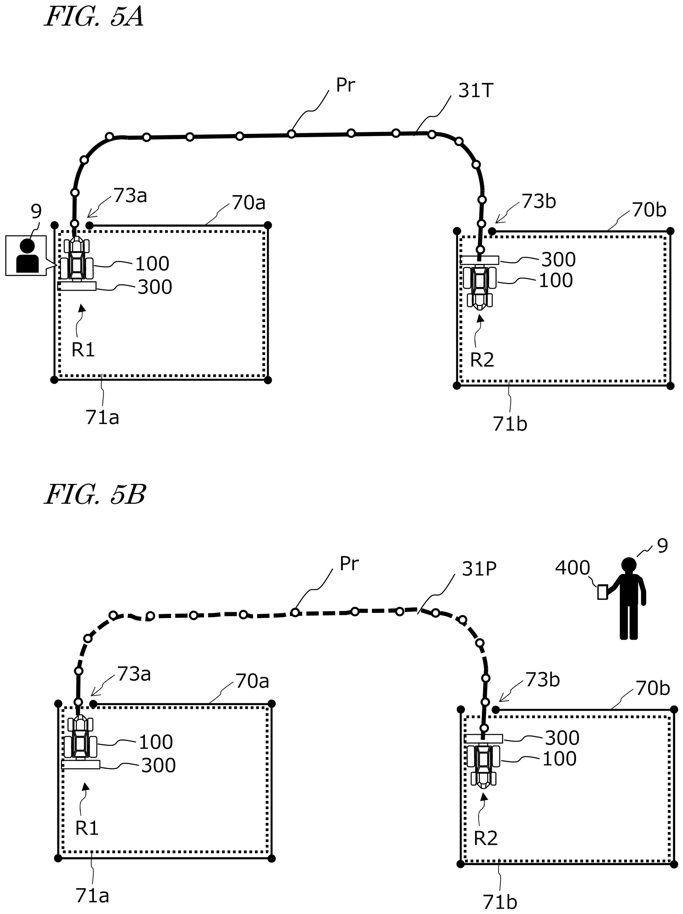

With reference to FIG. **5A** and FIG. **5B****,** operations of the controller **180** of the travel control system **1000** in the recording mode and the reproducing mode will be described. FIG. **5A** is a diagram schematically showing an example of a path **31T** that is traveled by the work vehicle **100** in the recording mode. FIG. **5B** is a diagram schematically showing an example of a path **31P** that is traveled by the work vehicle **100** in the reproducing mode. In this example, the path **31T** and the path **31P** are paths that connect a first field **70a** and a second field **70b.**

As shown in FIG. **5A****,** in the recording mode, the work vehicle **100** travels along the path **31T** from a position **R1** in the first field **70a** to a position **R2** in the second field **70b.** In the recording mode, the controller **180** records the position data being output from the positioning device **110,** as acquired while the work vehicle **100** travels along the path **31T,** to the storage device **870.**

FIG. **5A** shows a state where the work vehicle **100** is located at a start point (position **R1)** of the path **31T** and a state where the work vehicle **100** is located at an end point (position **R2).** In this example, the path **31T** is a path that begins at the position **R1** in the first field **70a,** goes out of the first field **70a** through an entrance/exit **73a** of the first field **70a,** goes outside the field, goes into the second field **70b** through an entrance/exit **73b** of the second field **70b,** and ends at the position **R2** in the second field **70b.** The position **R1** in the first field **70a** is located in a predetermined region **71a** within the first field **70a,** for example. The position **R2** in the second field **70b** is located in a predetermined region **71b** within the second field **70b,** for example.

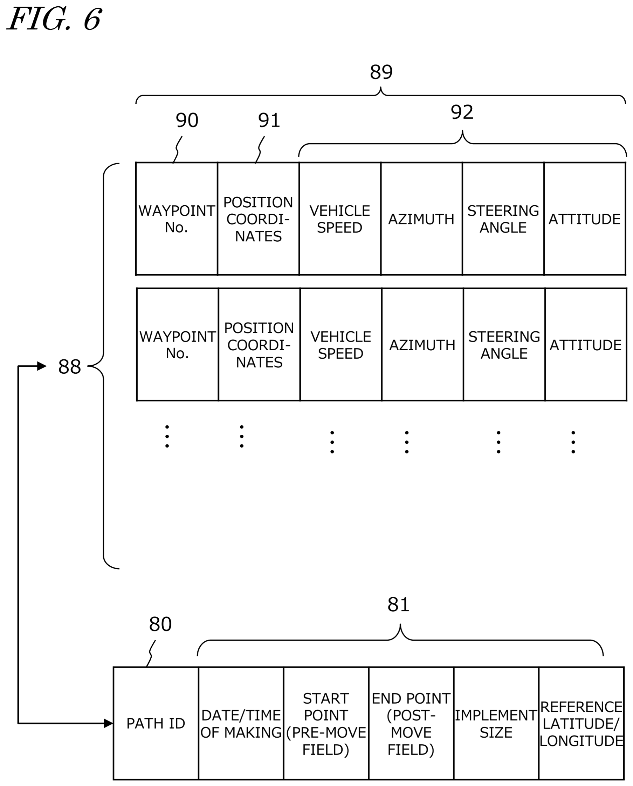

In the recording mode, while the work vehicle **100** is traveling along the path **31T,** for example, the controller **180,** based on the position data that is output from the positioning device **110,** records multiple pieces of waypoint data to the storage device **870.** Each of the multiple pieces of waypoint data includes information concerning the position of the work vehicle **100** (which may be referred to as "first information"). For example, as shown in FIG. **5A****,** position data indicating each of a plurality of positions (waypoints) **Pr** on the path **31T** along which the work vehicle **100** travels is recorded to the storage device **870** as waypoint data. As "path data" indicating the path **31T,** the multiple pieces of waypoint data may be recorded to the storage device **870** in association with information of the path **31T.** A specific example will be described with reference to FIG. **6****.**

In the recording mode, the controller **180** may further record sensor data concerning the state of the work vehicle **100** that is output from the sensor group **150** to the storage device **870.** In such a case, for example, each of the multiple pieces of waypoint data further includes information concerning the state of the work vehicle **100** (which may be referred to as "second information"). The second information included in each of the multiple pieces of waypoint data may be recorded in association with the corresponding first information. Because the second information is recorded in association with the corresponding first information, information of the state of the work vehicle **100** at each position on the path **31T** along which the work vehicle **100** has traveled is recorded.

FIG. **6** is a schematic diagram showing an example of waypoint data to be recorded to the storage device **870.** Each piece of waypoint data **89** shown in FIG. **6** includes a waypoint number (No.) **90,** first information **91** indicating the position of the work vehicle **100,** and second information **92** indicating state of the work vehicle **100.** The first information **91** indicates position coordinates of that waypoint. The position coordinates may indicate a latitude and a longitude in the geographical coordinate system, or indicate position coordinates in a coordinate system that is distinct from the geographical coordinate system, for example. In addition to the latitude and longitude, the position coordinates may also include altitude information. The second information **92** in the example of FIG. **6** includes information indicating the vehicle speed, azimuth, steering angle, attitude of the work vehicle **100.** However, the second information **92** may include only some of such information. Alternatively, the second information **92** may include other information not shown in FIG. **6****.** As described above, the waypoint data may not even include the second information **92.** Path data **88** including an aggregate of waypoint data **89** (i.e., multiple pieces of waypoint data) may be recorded to the storage device **870** in association with an identifier (e.g., path ID) **80** identifying a path. The identifier **80** of a path is kept in association with information **81** concerning that path. In the illustrated example, the information **81** concerning the path includes information of date/time of making the path data, information of a start point (e.g. a pre-move field) of the path, information of an end point (e.g. a post-move field) of the path, information of the latitude and longitude of a reference point (e.g., a start point or an end point of the path) of the path, and information of the size of an implement that was linked to the work vehicle when traveling along the path, for example. The information **81** concerning the path may include only some of such information. Alternatively, the information **81** concerning the path may include other information that is not illustrated in FIG. **6****.**

The second information broadly includes information concerning states of the work vehicle **100** other than its position. The second information includes information concerning operation of the work vehicle **100,** e.g., a traveling state, for example. The traveling state of the work vehicle **100** is defined by the velocity, acceleration (i.e., rate of change in velocity per unit time), traveling direction (azimuth), and the like of the work vehicle **100.** Information concerning the traveling state of the work vehicle **100** includes any one or more of: information of the velocity of the work vehicle **100,** information of the engine speed of the work vehicle **100,** information of the acceleration of the work vehicle **100;** information of the azimuth (orientation) of the work vehicle **100,** information of the steering angle of the wheels responsible for steering of the work vehicle **100,** information of the gear ratio of the transmission **103** of the work vehicle **100,** and the like, for example. The second information may include information of the attitude of the work vehicle **100.** Information of the azimuth of the work vehicle **100** may include information of an angle made by the horizontal component of the traveling direction of the work vehicle **100** and a reference direction (e.g., north), for example. Information of the attitude of the work vehicle **100** may include information of the roll angle and pitch angle of the work vehicle **100,** for example. Information of the attitude of the work vehicle **100** includes information of the azimuth of the work vehicle **100,** for example. Without being limited to information concerning the operation of the work vehicle **100,** the second information may include information of the temperature of the work vehicle **100** (e.g., temperature of the engine coolant), information concerning the presence/absence of problems of the work vehicle **100** (e.g., Diagnostic Trouble Code: DTC), and the like, for example. Specific examples of methods of acquiring the second information will be described later.

The second information may include information concerning the state of the linkage device **108** to enable linking of the implement **300.** The linkage device **108** may include the PTO shaft to supply motive power to the implement **300** and a three-point hitch to adjust the height of the implement **300,** for example. Information concerning the state of the linkage device **108** may include any one or more of: information of rotation ON or OFF of the PTO shaft, and information of the height of the three-point hitch, for example.

In a case where the work vehicle **100** has the implement **300** linked thereto, the second information may include, in addition to information concerning the state of the work vehicle **100,** information concerning the state of the implement **300.** For example, in a case where the implement **300** has a positioning device mounted thereto, information of the position or azimuth (e.g., angle with respect to a reference azimuth) of the implement **300** may be included in the second information. Alternatively, in a case where a sensor to detect the operation of a movable structure in the implement **300** is provided in the implement **300,** information that is detected by that sensor may be included in the second information.

In the example of FIG. **5A****,** in the recording mode, the work vehicle **100** performs manual traveling via manual operation of the driver **9** on the work vehicle **100.** Without being limited to this example, however, the work vehicle **100** may perform self-traveling via self-driving in the recording mode. When the work vehicle **100** performs self-traveling in the recording mode, the work vehicle **100** may autonomously travel without involving manual operation of the driver, or perform self-traveling but travel partly based on manual operation of the driver. For example, an automatic steering control may be performed during travel in the recording mode, such that the driver performs control of the traveling speed of the work vehicle **100** while steering control is automatically performed. Alternatively, during travel in the recording mode, the work vehicle **100** may perform self-traveling, while the implement **300** operates via manual operation of the driver. Manual operation of the driver includes not only manual operation of the driver on the work vehicle **100,** but also remote manipulation by a driver (operator) outside the work vehicle **100.** Such remote manipulations may be performed by using the terminal devices **400** shown in FIG. **4****,** or other remote manipulation devices, for example.

In the reproducing mode shown in FIG. **5B****,** the work vehicle **100** performs travel via self-driving. In the reproducing mode, by controlling the speed and steering of the work vehicle **100** based on the position data recorded in the storage device **870,** the controller **180** causes the work vehicle **100** to travel via self-traveling. In the reproducing mode, for example, the controller **180** causes the work vehicle **100** to travel along a target path **31P** that is defined by the first information included in the multiple pieces of waypoint data recorded in the storage device **870.** For example, the controller **180** performs steering control for the work vehicle **100** so as to minimize deviations of the position and orientation (azimuth) of the work vehicle **100** with respect to the target path **31 P.** This allows the work vehicle **100** to travel along the target path **31P.** In the reproducing mode, the work vehicle **100** is able to automatically reproduce the path of the work vehicle **100** that was recorded in the recording mode.

In the reproducing mode, as shown in FIG. **5B****,** a driver (user) **9** who is at a remote position from the work vehicle **100** may operate the terminal device **400** to control the self-traveling of the work vehicle **100.** Without being limited to the illustrated example, a driver who operates the terminal device or the operation terminal may be on the work vehicle **100.** The terminal device **400** to be manipulated by the driver **9** may be a mobile type operation terminal that can be carried around, or a stationary type operation terminal. A stationary type operation terminal may be attached to the work vehicle **100,** or provided at a remote place from the work vehicle **100.** The terminal device **400** may include a display device, e.g., a touch screen. For example, the display device may be liquid crystal, organic light-emitting diode (OLED), or other displays. The terminal device **400** may further include one or more buttons. The terminal device **400** may include a storage device.

With the travel control system according to the present example embodiment, in the reproducing mode, the operation (e.g., travel) of the work vehicle **100** can be automatically reproduced based on first information concerning the position of the work vehicle **100** that was recorded in the storage device **870.** As a result, iterative operations of the work vehicle **100** can be efficiently performed. Therefore, automation and unmanned execution of the operation of the work vehicle **100** can be promoted.

In the recording mode, by further recording second information concerning the state of the work vehicle **100** other than its position in association with the first information concerning the position of the work vehicle **100,** automation and unmanned execution of the operation of the work vehicle **100** can be further promoted.

As in the examples of FIG. **5A** and FIG. **5B****,** in a case where the work vehicle **100** has the implement **300** linked thereto, based on the first information (or, alternatively, the first information and second information) included in multiple pieces of waypoint data recorded in the recording mode, the controller **180** can control the operations of the work vehicle **100** and the implement **300,** while causing the work vehicle **100** to perform self-traveling. In other words, in the reproducing mode, the work vehicle **100** can automatically reproduce not only the operation of the work vehicle **100** that was recorded in the recording mode, but also the operation of the implement **300.**

In a case where the work vehicle **100** has the implement **300** linked thereto, based on the first information recorded in the recording mode, the operation of the work vehicle **100** with the implement **300** linked thereto can be reproduced in the reproducing mode, such that iterative operations of the work vehicle **100** with the implement **300** linked thereto can be efficiently carried out. For example, by recording second information concerning the state of the implement **300** in association with the first information concerning the position of the work vehicle **100** in the recording mode, automation and unmanned execution of the work by the implement **300** can be promoted. In other words, the work vehicle **100** may automatically reproduce not only the operation of the work vehicle **100** recorded in the recording mode but also the operation of the implement **300,** such that iterative work to be performed by the implement **300** can be efficiently performed.

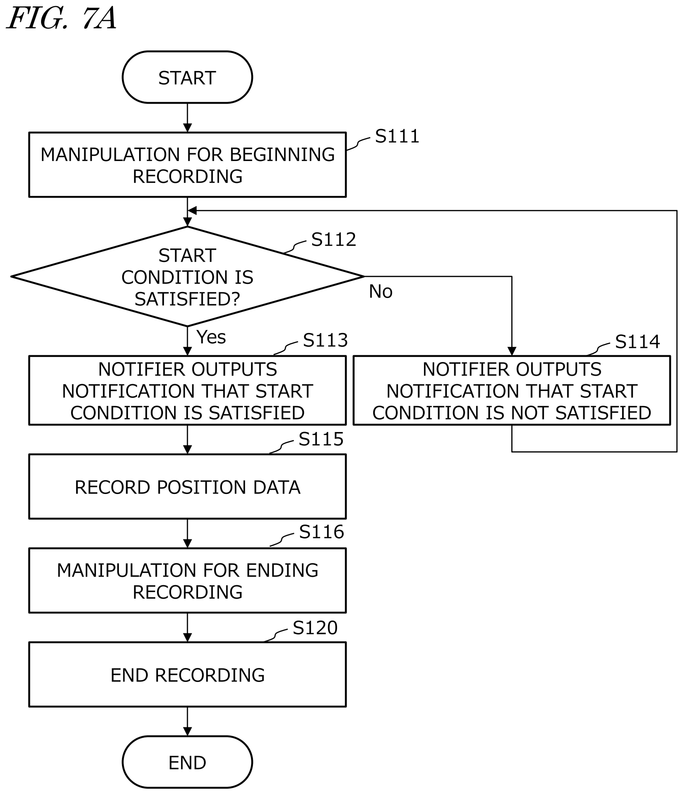

FIG. **7A** is a flowchart showing an example processing to be performed in the recording mode.

At step **S111,** the controller **180** receives a signal including an instruction to begin recording of position data. For instance, when a manipulation for beginning recording of position data is performed by, for example, the user (e.g., a driver of the work vehicle **100),** the controller **180** receives a signal including an instruction to begin recording of position data. For instance, the user performs the manipulation for beginning recording of position data by manipulating an input device such as the operation terminal **200** or a predetermined operation switch provided in the work vehicle **100.** The "manipulation for beginning recording of position data" may be performed when beginning recording of position data at the start point of a path to be recorded in the recording mode, for example. Without being limited to this, it may be performed when, after recording of position data is suspended in the middle of a path to be recorded in the recording mode, the recording of position data is to be restarted.

At step **S112,** the controller **180** determines whether a condition for beginning recording of position data (which may be referred to as the "start condition" or "recording start condition") is satisfied or not. The recording start condition stipulates satisfying all of a plurality of predefined conditions. In other words, the controller **180** determines whether all of the plurality of conditions are satisfied or not. If it is determined that the recording start condition is satisfied ("Yes" from step **S112),** control proceeds to step **S113.** If it is determined that the recording start condition is not satisfied ("No" from step **S112),** control proceeds to step **S114.**

The plurality of conditions defining the recording start condition may include any two or more of the following conditions, for example. Details of each condition and a method of determination thereof will be described later. However, the conditions defining the recording start condition are not limited to what is exemplified below.
· the work vehicle **100** is stopped
· the prime mover **102** of the work vehicle **100** is working
· roll angle of the work vehicle **100** has a predetermined value or below
· pitch angle of the work vehicle **100** has a predetermined value or below
· reception of satellite signals by the positioning device **110** is sufficient
· the work vehicle **100** is in a predetermined traveling mode
· the work vehicle **100** is in a predetermined region
· rotation of the PTO shaft in the linkage device **108** of the work vehicle **100** is OFF
· height of the three-point hitch in the linkage device **108** of the work vehicle **100** has a predetermined value or above

At step **S113,** the controller **180** causes a notification that the recording start condition is satisfied (which may be referred to as a "first notification") to be output by a notifier. At step **S114,** the controller **180** causes a notification that the recording start condition is not satisfied to be output by a notifier.

The notifier may include a display device and/or an audio output device such as a buzzer or loudspeaker, for example. The notifier is provided in an operation terminal that is operated by the user (e.g., the operation terminal **200** included in the work vehicle **100),** for example. The notifier may be mounted in the work vehicle **100,** and is not limited to this example so long as it is configured to be capable of outputting a notification toward the user. The notification may be issued in any manner that stimulates the senses of the user, e.g., an image, light, sound, or vibration. A combination of any one or more of image, light, sound, and vibration may be used as a notification. Depending on whether the recording start condition is satisfied or not satisfied, the controller **180** causes a respectively different notification to be output by the notifier. For example, if the notifier includes a display device, a respectively different image is displayed on the display device depending on whether the recording start condition is satisfied or not satisfied. If the notification includes light or vibration, the flickering pattern (cycle) of light or vibration pattern (cycle) may be varied depending on whether the recording start condition is satisfied or not satisfied.

Because the controller **180** causes the notifier to output a notification as to whether the recording start condition is satisfied or not, it becomes possible to restrain recording of position data from being performed in a state that is not suitable for recording position data. Therefore, reproducibility of the operation of the work vehicle **100** in the reproducing mode can be enhanced, and self-traveling of the work vehicle **100** in the reproducing mode can be smoothly performed. This can also reduce the likelihood that recording of position data may be suspended halfway, in the middle of the recording mode. In a situation where recording of position data happens to be suspended in the middle of the recording mode, this can solve the problem of having to perform the travel under the recording mode all over again, thus providing an improved convenience for the user.

At step **S114,** the controller **180** may cause a notification indicating any condition among the plurality of conditions that is unsatisfied (which may be referred to as a "second notification") to be output by the notifier. The controller **180** may cause a notification indicating a manipulation to be performed in order to satisfy any condition among the plurality of conditions that is unsatisfied (which may be referred to as a "third notification") to be output by the notifier. If the notifier includes a display device, for example, the second notification and/or the third notification may be indicated to the user as an image(s). If the notifier includes an audio output device, the second notification and/or the third notification may be indicated to the user as an audio(s). If the notifier includes a display device, after displaying the second notification and/or the third notification on the display device, the second notification and/or the third notification being displayed may be erased when the unsatisfied condition becomes satisfied. Because the recording start condition stipulates that all of the plurality of conditions are satisfied, causing the notifier to output the second notification and/or the third notification provides an improved convenience for the user. For example, this makes it easier for the user to know what action is necessary in order to satisfy the recording start condition.

In the case of proceeding to step **S114,** after the lapse of a predetermined time, for example, the controller **180** performs the determination of step **S112** again.

In the case of proceeding to step **S113,** at step **S115** following step **S113,** the controller **180** performs recording of position data as the work vehicle **100** travels. For example, the controller **180** may record position data every time the work vehicle **100** travels a certain distance, or for every certain period of time. The certain distance (e.g., a distance between two adjacent waypoints **Pr** along the traveling direction of the work vehicle **100** in the example of FIG. **5A****)** may be set to a value on the order of several ten centimeters (cm) to several meters (m), for example. The certain period of time may be set to a value in the range from 1 second to 10 seconds, for example. Note that the recording of position data at step **S115** includes not only recording position data that is output from the positioning device **110** to the storage device **870** but also temporarily storing to a storage device that is distinct from the storage device **870.** The storage device that is distinct from the storage device **870** may be a memory included in the controller **180,** such as the RAM **285** shown in e.g. FIG. **3B****,** or a storage device that is included in a server computer connected to the controller **180** via a communications network.

After step **S115,** the controller **180** receives a signal including an instruction to end recording of position data at step **S116.** For instance, when a manipulation for ending recording of position data is performed by e.g. the user, the controller **180** receives a signal including an instruction to end recording of position data.

After step **S116,** the controller **180** ends recording of position data at step **S120.**

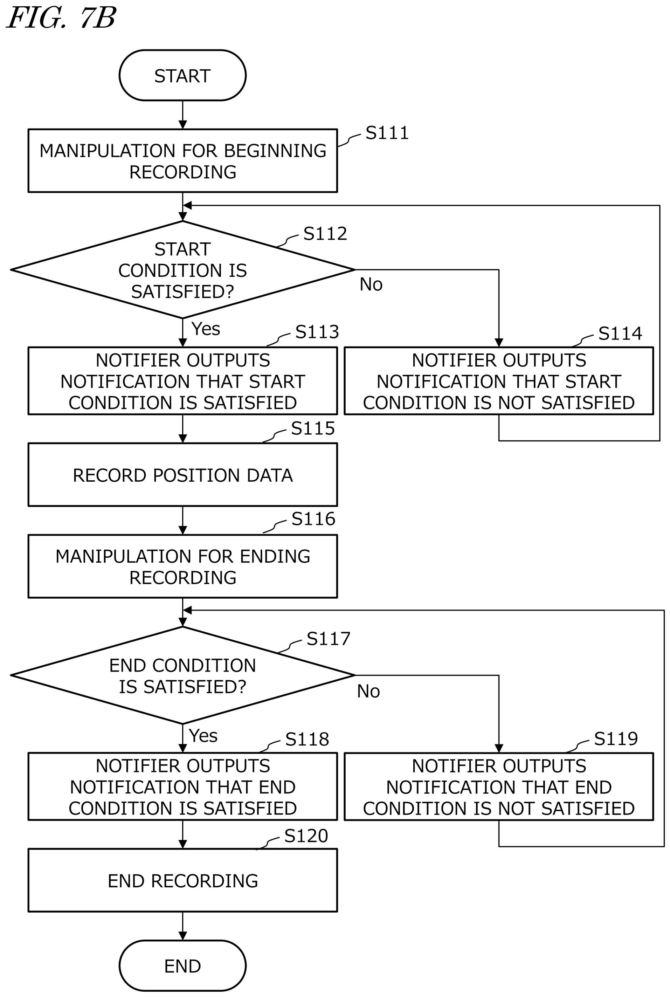

FIG. **7B** is a flowchart showing another example processing to be performed by the controller **180** in the recording mode. The flowchart of FIG. **7B** differs from the flowchart of FIG. **7A** in that steps **S117, S118** and **S119** are further included. Differences from the flowchart of FIG. **7A** will mainly be described.

The processes of steps **S111** to **S116** are performed similarly to the example of **FIG. 7A****.**

After step **S116,** the controller **180** determines at step **S117** whether a condition for ending recording of position data (which may be referred to as the "end condition" or "recording end condition") is satisfied or not. The recording end condition stipulates satisfying all of a plurality of predefined conditions. In other words, the controller **180** determines whether all of the plurality of conditions are satisfied or not. If it is determined that the recording end condition is satisfied ("Yes" from step **S117),** control proceeds to step **S118.** If it is determined that the recording end condition is not satisfied ("No" from step **S117),** control proceeds to step **S119.**

The plurality of conditions defining the recording end condition may include any two or more of the aforementioned exemplary conditions defining the recording start condition, for example. The recording end condition and the recording start condition may be similar.

At step **S118,** the controller **180** causes a notification that the recording end condition is satisfied (which may be referred to as a "fourth notification") to be output by a notifier. At step **S119,** the controller **180** causes a notification that the recording end condition is not satisfied to be output by the notifier. The notifier to output the notifications at step **S118** and step **S119** may be the same notifier that outputs the notification as to whether the recording start condition is satisfied or not at step **S113** or step **S114,** or a different notifier.

Because the controller **180** causes the notifier to output a notification as to whether the recording end condition is satisfied or not, it becomes possible to restrain recording of position data from being ended in a state that is not suitable for ending recording of position data. Therefore, reproducibility of the operation of the work vehicle **100** in the reproducing mode can be enhanced, and self-traveling of the work vehicle **100** in the reproducing mode can be smoothly performed.

At step **S119,** the controller **180** may cause the notifier to output a notification indicating any condition among the plurality of conditions that is unsatisfied (which may be referred to as a "fifth notification"). The controller **180** may causes the notifier to output a notification indicating a manipulation to be performed in order to satisfy any condition among the plurality of conditions that is unsatisfied (which may be referred to as a "sixth notification"). If the notifier includes a display device, for example, the fifth notification and/or the sixth notification may be indicated to the user as an image(s). If the notifier includes an audio output device, the fifth notification and/or the sixth notification may be indicated to the user as an audio(s). If the notifier includes a display device, after displaying the fifth notification and/or the sixth notification on the display device, the fifth notification and/or the sixth notification being displayed may be erased when the unsatisfied condition becomes satisfied. Because the recording end condition stipulates that all of the plurality of conditions are satisfied, causing the notifier to output the fifth notification and/or the sixth notification provides an improved convenience for the user. For example, this makes it easier for the user to know what action is necessary in order to satisfy the recording end condition.

In the case of proceeding to step **S119,** after the lapse of a predetermined time, for example, the controller **180** performs the determination of step **S117** again.

In the case of proceeding to step **S118,** at step **S120** following step **S118,** the controller **180** ends recording of position data.

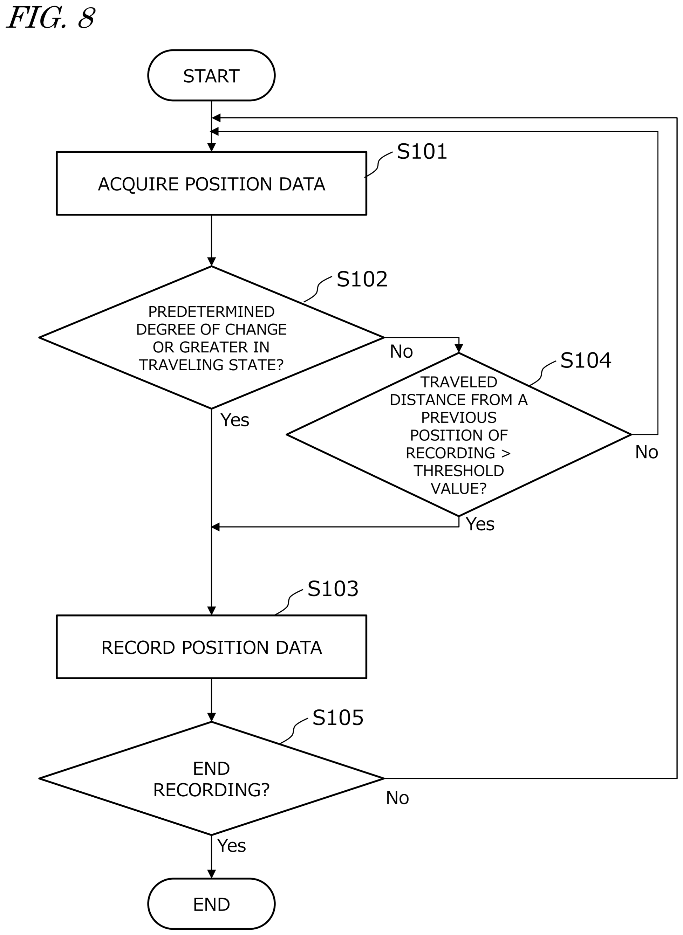

FIG. **8** is a flowchart showing an example processing to be performed by the controller **180** in the recording mode. FIG. **8** is a flowchart showing an example of the process to be performed at step **S115** n FIG. **7A** or FIG. **7B****.**

The timing of beginning the recording mode is designated by the user, for example. For instance, the controller **180** may begin the recording mode when a signal including an instruction to begin the recording mode is transmitted to the controller **180** through a manipulation of the driver. For instance, the driver on the work vehicle **100** can transmit a signal including an instruction to begin the recording mode to the controller **180** by manipulating an input device such as the operation terminal **200** or a predetermined operation switch provided in the work vehicle **100.** The recording mode may be begun during travel of the work vehicle **100,** or begun while the work vehicle **100** is stopped.

Once the recording mode is begun, then at step **S101,** the controller **180** acquires position data that is output from the positioning device **110.** For example, the controller **180** may acquire position data each time a certain period passes, or each time the work vehicle **100** travels a certain distance.

At step **S102,** the controller **180** determines whether a predetermined degree of change or greater has occurred in the traveling state of the work vehicle **100.** As described earlier, the traveling state of the work vehicle **100** is defined by the velocity, acceleration, traveling direction (azimuth), or the like of the work vehicle **100.** For example, if the change in any of the velocity, acceleration, and traveling direction (azimuth) of the work vehicle **100** registers a predetermined value or higher, it is determined that a predetermined degree of change or greater has occurred in the traveling state of the work vehicle **100** ("Yes" from step **S102).** For example, if the work vehicle **100** comes to a halt from a traveling state, or if the work vehicle **100** begins traveling from a halting state, etc., it is determined that a predetermined degree of change or greater has occurred in the traveling state of the work vehicle **100.** If "Yes" at step **S102,** control proceeds to step **S103.** If "No" from step **S102,** control proceeds to step **S104.**

At step **S103,** the controller **180** records position data that was acquired in step **S101.** The recording of position data in step **S103** includes not only recording the position data that is output from the positioning device **110** to the storage device **870,** but also temporarily storing it to a storage device that is distinct from the storage device **870.** Such a storage device distinct from the storage device **870** may be a memory included in the controller **180,** e.g., the RAM **285** shown in FIG. **3B****,** or may be a storage device included in a server computer that is connected to the controller **180** via a communications network, for example.

At step **S104,** the controller **180** determines whether the traveled distance from a previous position of recording position data exceeds a threshold value or not. The threshold value for traveled distance may be set to a value on the order of several ten centimeters (cm) to several meters (m), for example. As another example, at step **S104,** the controller **180** may determine whether the elapsed time since the previous time of recording position data exceeds a threshold value or not. The time-wise threshold value may be set to a value in the range from 1 second to 10 seconds, for example.

If "Yes" at step **S104,** control proceeds to step **S103.** If "No" at step **S104,** recording of position data is not performed, and control returns to step **S101.**

Until receiving a signal including an instruction to end recording of position data (step **S105),** the controller **180** repeats the processes of step **S101,** step **S102,** step **S103,** and step **S104.**

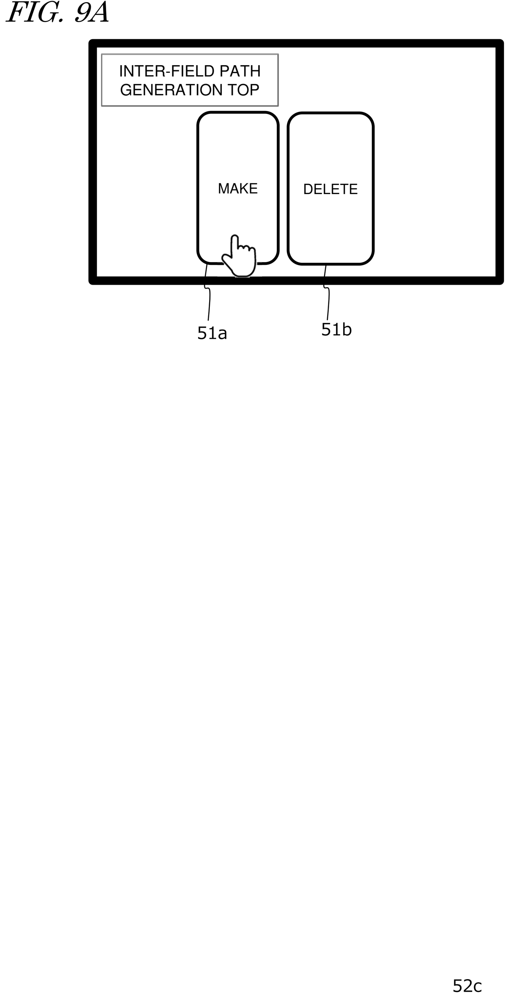

FIG. **9A** to FIG. **9D****,** FIG. **10A** to FIG. **10C****,** FIG. **11A** to FIG. **11C****,** FIG. **12A** to FIG. **12C****,** and FIG. **13A** to FIG. **13C** show examples of screen images to be displayed on an operation terminal that is operated by the user (e.g., a driver of the work vehicle **100).** These screen images include a graphical user interface (GUI) which is a screen for allowing the user to make settings concerning the recording mode. These screen images are displayed on a display device that is included in the operation terminal **200** of the work vehicle **100,** for example. Herein, an example is illustrated where position data is being recorded while the work vehicle **100** travels along a path interconnecting fields in the recording mode.

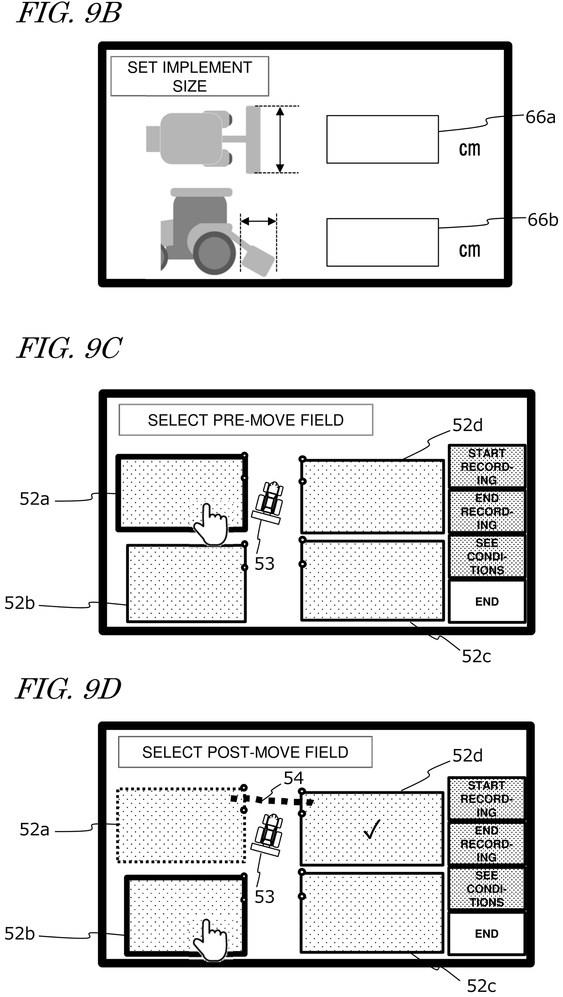

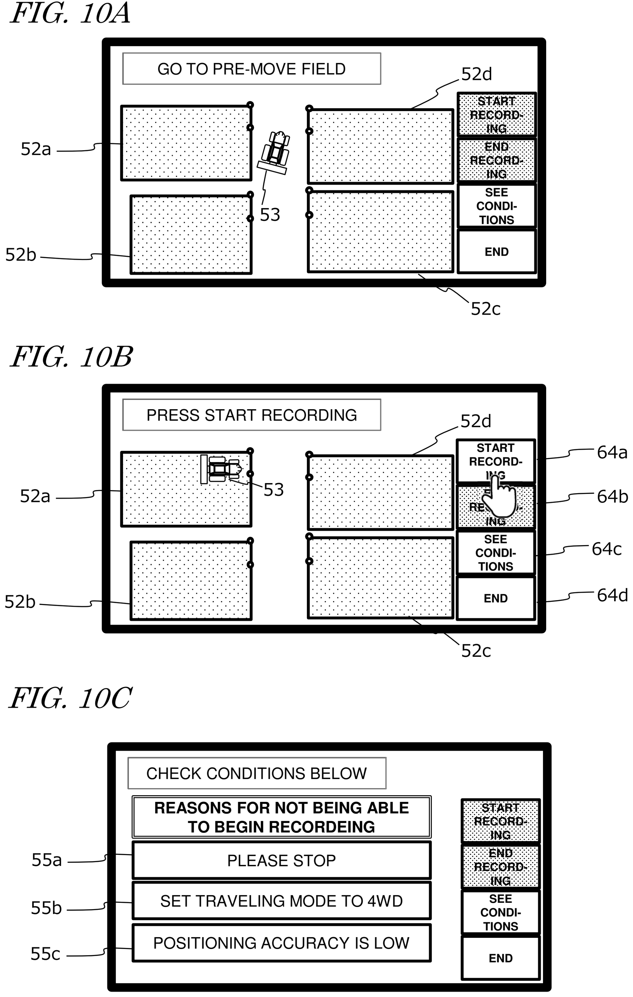

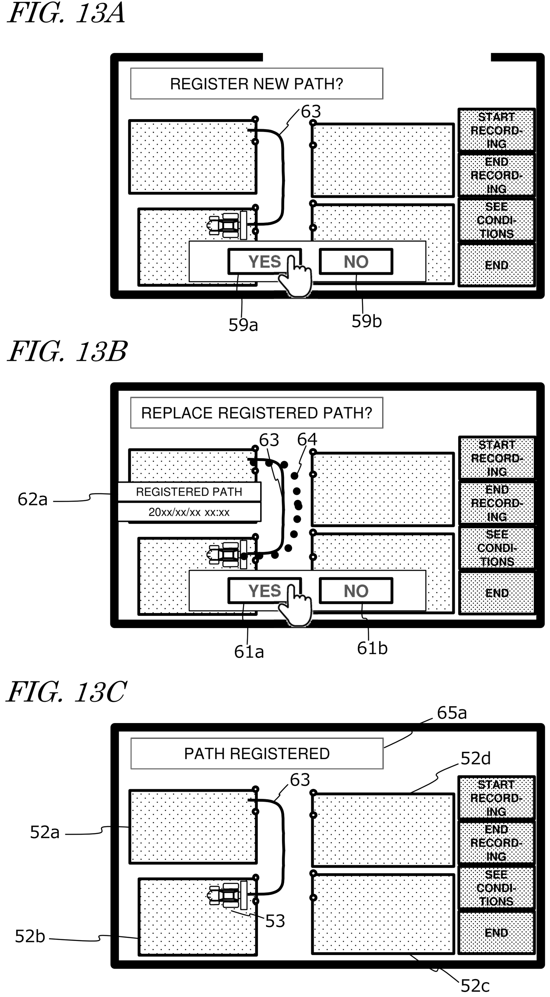

FIG. **9A****,** FIG. **9B,** FIG. **9C,** and FIG. **9D** show example screen images to make settings for the recording mode before the work vehicle **100** begins travel under the recording mode. FIG. **10A,** FIG. **10B,** FIG. **10C****,** FIG. **11A,** FIG. **11B,** FIG. **11C****,** FIG. **12A,** FIG. **12B,** and FIG. **12C** are example screen images to be displayed during the recording mode. FIG. **13A,** FIG. **13B,** and FIG. **13C** are example screen images to be displayed after the work vehicle **100** finishes travel under the recording mode.

As shown in FIG. **9A****,** a screen image is displayed to select to either make or delete path data. In the screen image of FIG. **9A****,** the user may select a "MAKE" button **51a** or a "DELETE" button **51b** in accordance with the manipulation which the user wishes to perform. When newly generating path data, the "MAKE" button **51a** is selected as in the illustrated example. If the "MAKE" button **51a** is selected in the screen image of FIG. **9A****,** a transition occurs to the screen image of FIG. **9B** or FIG. **9C****.**

The screen image of FIG. **9B** includes a GUI which allows the user to set a size of the implement **300.** In the illustrated example, the user is able to input a width and a length of the implement **300,** respectively, in boxes **66a** and **66b.** The GUI may be configured so that it allows not only the width and length of the implement **300** but also other information concerning work to be input. For example, the GUI may be configured so that it allows at least one of the following to be input: type of work; type of the implement (e.g., model); or maximum height when the implement is lifted.

The screen image of FIG. **9C** includes a GUI which allows the user to set a pre-move field. In the illustrated example, the user selects a pre-move field from among field images **52a, 52b, 52c** and **52d** that are being displayed (which may be just referred to as "fields **52a** to **52d"** for simplicity). In the screen image, an image **53** representing the work vehicle **100** is also shown. The image **53** representing the work vehicle **100** may be indicated at a position reflecting the current position of the work vehicle **100.** This allows the user to confirm a position relationship between the work vehicle **100** and the fields within the screen image. In the example of FIG. **9C****,** the field **52a** is selected as a pre-move field. Once a pre-move field is selected, a transition occurs to the screen image of the FIG. **9D****.**

The screen image of FIG. **9D** includes a GUI which allows the user to set a post-move field. In the illustrated example, the user selects a post-move field from among fields which are not the pre-move field **52a,** i.e., the fields **52b, 52c** and **52d.** The illustrated example includes an indication that path data concerning a path **54** connecting the selected pre-move field **52a** and the field **52d** is already recorded. In the example of FIG. **9D****,** the field **52b** is being selected as a post-move field.

The screen image of FIG. **10A** may be displayed until the work vehicle **100** moves to the pre-move field **52a.** After the work vehicle **100** has moved to the pre-move field **52a,** a transition occurs to the screen image of FIG. **10B****.**

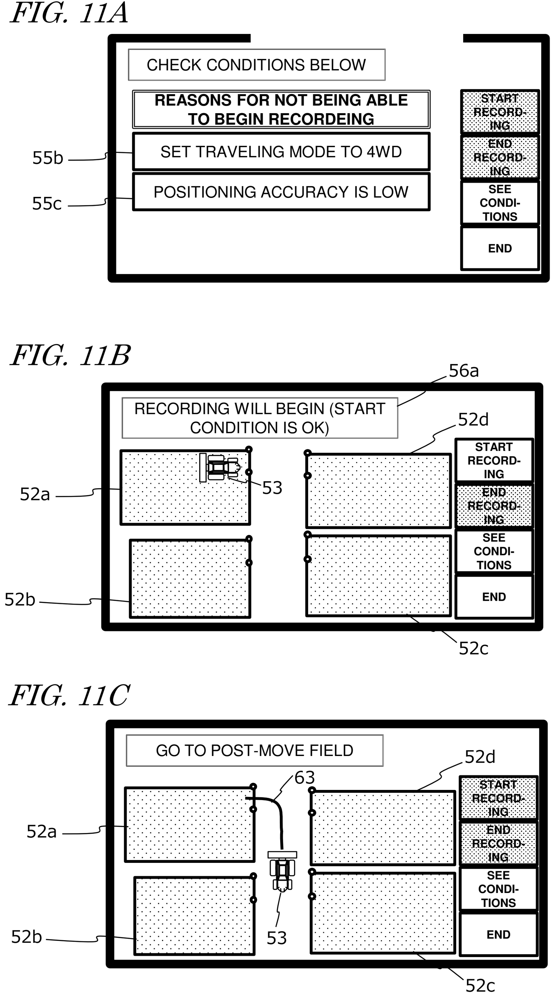

The screen image of FIG. **10B** includes a GUI which allows the user to perform a manipulation for beginning recording of position data. In the screen image of FIG. **10B****,** the user selects the "START RECORDING" button **64a** to perform a manipulation for beginning recording of position data. If it is determined that the recording start condition is not satisfied, a transition occurs to the screen image of the FIG. **10C****.** If it is determined that the recording start condition is satisfied, a transition occurs to the screen image of the FIG. **11B****.**

The screen image of FIG. **10C** includes notifications **55a, 55b** and **55c** indicating conditions among the plurality of conditions defining the recording start condition that are unsatisfied. The notifications **55a, 55b** and **55c** respectively correspond to the condition that "the work vehicle **100** is stopped", the condition that "the work vehicle **100** is in a predetermined traveling mode", and the condition that "reception of satellite signals by the positioning device **110** is sufficient". Upon is determining that any of these conditions has become satisfied, the notification corresponding to the now-satisfied condition is erased. For example, the screen image of FIG. **11A** may be displayed when, after the screen image of FIG. **10C** is displayed, the work vehicle **100** comes to a halt so that the condition that "the work vehicle **100** is stopped" becomes satisfied. In the screen image of FIG. **11A****,** the notification **55a** has been erased from the screen image of FIG. **10C****.**

The screen image of FIG. **11B** includes a notification **56a** indicating that the recording start condition is now satisfied.

If it is determined that the recording start condition is satisfied, a transition occurs to the screen image of FIG. **11C****.** The screen image of FIG. **11C** may be displayed while position data is being recorded. The screen image of FIG. **11C** includes the image **53** of the work vehicle **100** and a trajectory **63** of the work vehicle **100.**

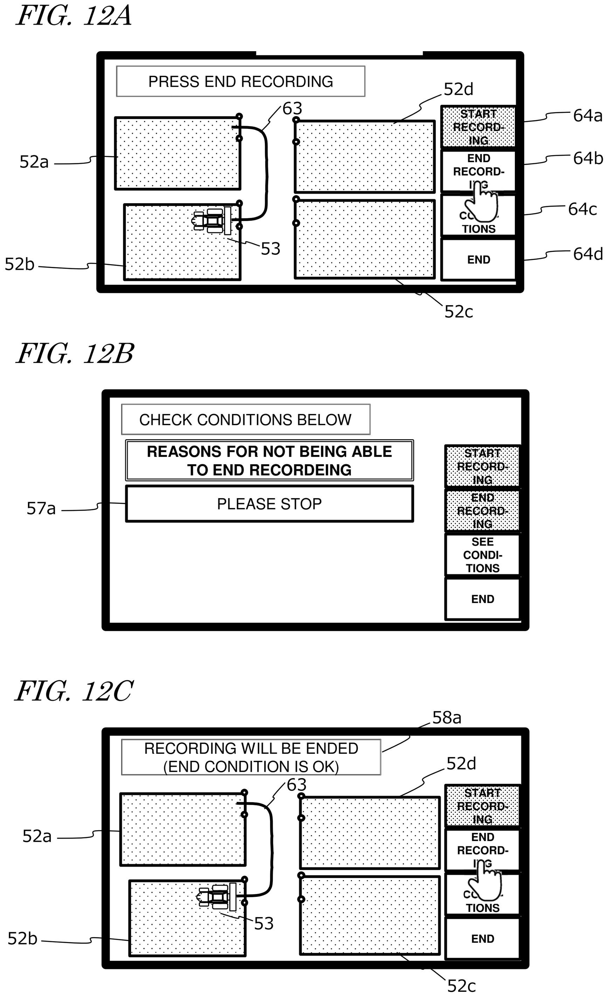

The screen image of FIG. **12A** may be displayed after the work vehicle **100** has arrived at the post-move field, for example. The screen image of FIG. **12A** includes a GUI which allows the user to perform a manipulation for ending recording of position data. In the screen image of FIG. **12A****,** the user selects an "END RECORDING" button **64b** to perform a manipulation for ending recording of position data. If it is determined that the recording end condition is not satisfied, a transition occurs to screen image of the FIG. **12B****.** If it is determined that the recording end condition is satisfied, a transition occurs to screen image of the FIG. **12C****.**

The screen image of FIG. **12B** includes a notification **57a** indicating a condition among the plurality of conditions defining the recording end condition that is unsatisfied. The notification **57a** corresponds to the condition that "the work vehicle **100** is stopped". If it is determined that any unsatisfied condition has become satisfied, the notification corresponding to the now-satisfied condition is erased.

The screen image of FIG. **12C** includes a notification **58a** indicating that the recording end condition is now satisfied.

If it is determined that the recording end condition is satisfied, the screen images of FIG. **13A,** FIG. **13B,** and FIG. **13C** may be displayed.

The screen image of FIG. **13A** includes a GUI which allows the user to perform a manipulation to make a setting as to whether any acquired position data is to be recorded as path data to the storage device **870** or not. The user selects a "YES" button **59a** or a "NO" button **59b** to set whether the acquired position data is to be recorded as path data to the storage device **870** or not. In this example, while the work vehicle **100** is traveling, position data that is acquired from the positioning device **110** is temporarily stored in the storage device **870** or a storage device that is distinct from the storage device **870** (e.g. the RAM **285** shown in FIG. **3B** or any other memory), and when the user selects the "YES" button **59a** in the screen image of FIG. **13A****,** it is recorded to the storage device **870** as path data, in association with a path identifier and path information.

In a case where, as in the screen image of FIG. **13B****,** path data of a path connecting the pre-move field **52a** and the post-move field **52b** is already recorded in the storage device **870,** a screen to make a setting as to whether path data is to be updated or not may be displayed. The user selects a "YES" button **61a** or a "NO" button **61b** to make a setting as to whether the path data is to be updated (replaced) or not. For the same combination of a pre-move field and a post-move field, more than one piece of path data may be recorded to the storage device **870.** In the screen image of FIG. **13B****,** a path **64** that is already recorded in the storage device **870** and information **62a** concerning the path **64** may also be displayed.

If path data is recorded in the storage device **870,** the screen image of the FIG. **13C** may be displayed. The screen image of the FIG. **13C** includes a notification **65a** that path data has been recorded in the storage device **870.**

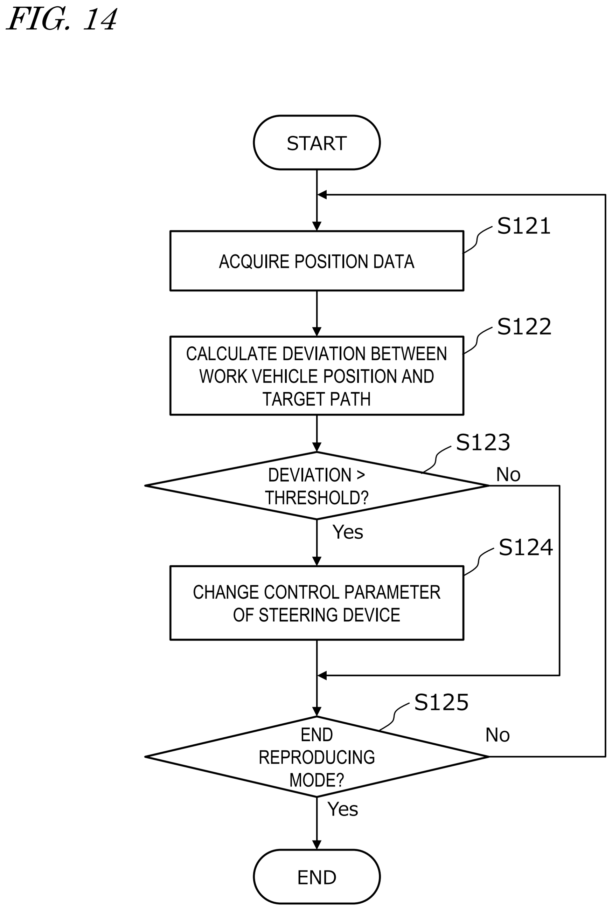

FIG. **14** is a flowchart showing an example processing to be performed in the reproducing mode.

In the reproducing mode, based on previously recorded waypoint data, the controller **180** causes the work vehicle **100** to automatically travel. The controller **180** acquires position data indicating the position of the work vehicle **100** that is output from the positioning device **110** (step **S121).** Next, the controller **180** calculates a deviation between the position of the work vehicle **100** and a target path (step **S122).** The target path is defined by positional information (first information) of multiple waypoints that are recorded in the recording mode. The deviation represents a distance between the position of the work vehicle **100** at that moment and the target path. The controller **180** determines whether the calculated deviation in position exceeds a previously-set threshold or not (step **S123).** If the deviation exceeds the threshold ("Yes" from step **S123),** the controller **180** changes a control parameter of the steering device **106** included in the driver **240** so that the deviation becomes smaller, thereby changing the steering angle (step **S124).** If step **S123** finds that the deviation does not exceed the threshold ("No" from step **S123),** the process of step **S124** is not performed. Until an instruction to end the reproducing mode is given (step **S125),** the controller **180** repeats the operation from step **S121** to step **S124.**

In the reproducing mode, by performing the process shown in FIG. **14****,** for example, the controller **180** causes the work vehicle **100** to perform self-traveling along the target path. Furthermore, based on the state information (second information) corresponding to each of the multiple waypoints defining the target path, the controller **180** may be configured or programmed to control the operation of the work vehicle **100.** For example, if the second information includes information of the steering angle of the wheels responsible for steering of the work vehicle **100,** in addition to the processing shown in FIG. **14****,** a control of the steering of the work vehicle **100** may be performed based on the steering angle included in the second information. If the second information includes information of the speed of the work vehicle **100,** the speed of the work vehicle **100** is controlled based on the information of speed included in the second information.

For the steering control and speed control of the work vehicle **100,** control techniques such as PID control or MPC control (model predictive control) may applied. By applying such control techniques, the control of bringing the work vehicle **100** closer to a target path and a target speed can be made smooth.

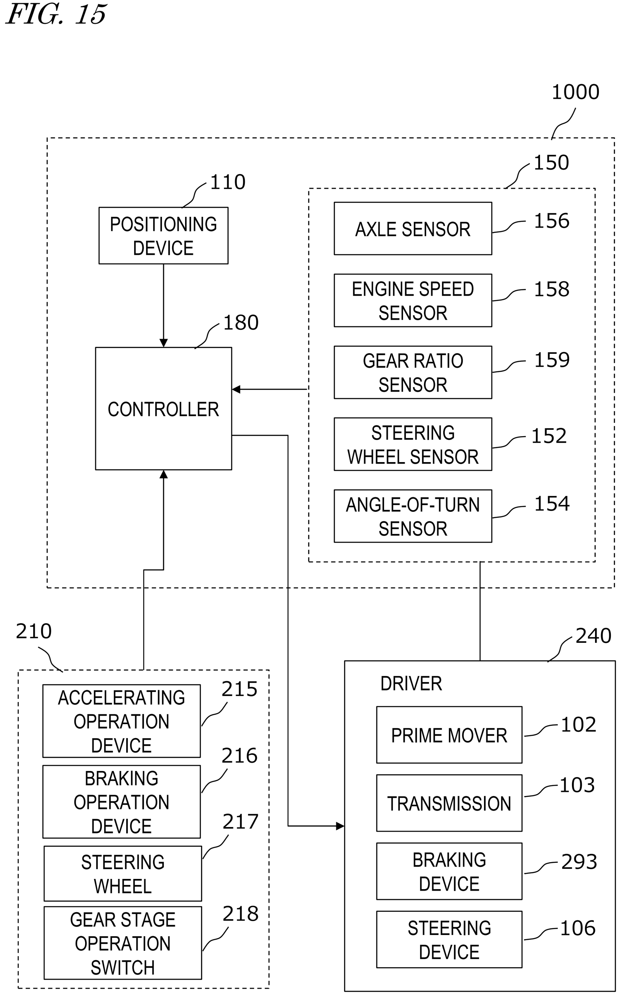

With reference to FIG. **15****,** an example processing to be performed by the controller **180** in a case where the second information includes information concerning the traveling state of the work vehicle **100** will be described. FIG. 15 is a schematic diagram for describing an example processing to be performed by the controller **180** of the travel control system **1000.** In addition to the travel control system **1000,** FIG. **15** also shows the driver **240** and the operation switches **210.** For simplicity, some component elements are omitted from illustration in FIG. **15****.**

By controlling the prime mover **102,** the braking device (brakes) **293,** and the transmission **103** included in the driver **240,** the controller **180** controls the speed of the work vehicle **100.** The braking device **293** applies braking to the axle that rotates the wheels **104** of the work vehicle **100.** Specifically, by controlling the engine speed of the prime mover (engine) **102** and/or the gear ratio of the transmission **103,** the speed of the work vehicle **100** can be controlled. For example, the transmission **103** has multiple gear stages, and the controller **180** controls the gear ratio of the transmission 103 by switching the gear stages of the transmission **103.** The multiple gear stages of the transmission **103** may be configured by a combination of multiple main gear stages and multiple range gear stages. When the work vehicle **100** is performing manual traveling, the controller **180** controls the speed of the work vehicle **100** by controlling the prime mover **102,** the braking device (brakes) **293,** and the transmission **103** in response to the driver's manipulation of an accelerating operation device **215** (e.g., an accelerator lever or an accelerator pedal), a braking operation device **216** (e.g., a brake pedal), and/or a gear stage operation switch **218** (e.g., a shift lever). The gear stage operation switch **218** is a switch to select a gear stage of the transmission **103.** The controller **180** may further switch between a two-wheel drive mode and a four-wheel drive mode in response to the driver's manipulation.

In the recording mode, the controller **180** consecutively acquires sensor data that is output from vehicle speed sensors such as the axle sensor **156,** an engine speed sensor **158,** and a gear ratio sensor **159** that detects information of the gear ratio of the transmission **103.** Based on such sensor data, as second information, the controller **180** generates and records information of the speed of the work vehicle **100,** information of the engine speed of the work vehicle **100,** and information of the gear ratio of the transmission **103,** in association with the positional information (first information) of each waypoint. In such a case, in the reproducing mode, the controller **180** controls the speed of the work vehicle **100** by controlling the prime mover **102,** the transmission **103,** and the braking device **293** included in the driver **240** based on the second information that was recorded in the recording mode. The gear ratio sensor **159** may be a sensor which is provided on a rotation axis within the transmission **103** and which detects the gear ratio, or a shift position sensor that detects the position of the shift lever (gear stage operation switch **218)** to select a gear stage to identify the selected gear stage. Without being limited to information that indicates the gear ratio itself, information of the gear ratio of the transmission **103** may be information that identifies a selected gear stage among the plurality of gear stages of the transmission **103,** for example. Since one gear stage corresponds to one gear ratio, identifying a gear stage allows the gear ratio to be identified.

The work vehicle **100** may have a bi-speed turn mode (front wheel speed increasing function). A bi-speed turn is an operation in which, when a driver steers the steering wheel so much that the steering angle of the front wheels exceeds a threshold, the speed of the front wheels is increased. Performing a bi-speed turn allows the turning radius to be decreased, thus resulting in a smoother turn. The work vehicle **100** may include a solenoid (referred to as a "bi-speed solenoid") to drive a clutch that switches the bi-speed turn mode ON/OFF. The controller **180** can switch the bi-speed solenoid ON/OFF via a hydraulic circuit. When the bi-speed solenoid is ON, the rotational speed of the front wheels is about twice that of the case where the bi-speed solenoid is OFF.

The second information may further include information concerning the traveling mode of the work vehicle **100.** For example, information concerning the traveling mode of the work vehicle **100** may include information as to forward travel or backward travel. Information concerning the traveling mode may include information as to whether the traveling mode of the work vehicle **100** is in a four-wheel drive mode or a two-wheel drive mode. Information concerning the traveling mode may include information as to whether the bi-speed turn mode is ON or OFF. Information concerning the traveling mode may further include information as to whether an automatic single brake mode is ON or OFF. The automatic single brake mode is a mode which, when ON, applies slight braking to the inner rear wheels when the steering angle of the front wheels **104F** (which are the wheels responsible for steering) exceeds a predetermined value during travel. In the reproducing mode, the controller **180** controls the traveling mode of the work vehicle **100,** by controlling the prime mover **102,** the transmission **103,** and the braking device **293** included in the driver **240** based on the second information that was recorded in the recording mode.

The controller **180** changes the steering angle of the front wheels **104F** (which are the wheels responsible for steering of the work vehicle **100)** by controlling the steering device **106,** and changes the azimuth of the work vehicle **100** by changing the steering angle of the wheels responsible for steering. When the work vehicle **100** is performing manual traveling, the controller **180** changes the steering angle of the wheels responsible for steering and the azimuth of the work vehicle **100** of the work vehicle **100** by controlling the steering device **106** in response to the driver's manipulation of the steering wheel **217.**

In the recording mode, based on sensor data (measurement values) that is output from the steering wheel sensor **152** and/or the angle-of-turn sensor **154,** the controller **180** acquires, as second information, information of the steering angle of the wheels responsible for steering of the work vehicle **100.** In such a case, in the reproducing mode, the controller **180** controls steering of the work vehicle **100** by controlling the hydraulic device or the electric motor included in the steering device **106** based on the second information that was recorded in the recording mode.

The second information may further include information concerning the attitude of the work vehicle **100.** The attitude of the work vehicle **100** is represented by a roll angle θ_{R}, a pitch angle θ_{P}, and a yaw angle θ_{Y}, for example. A roll angle θ_{R} represents the amount of rotation of the work vehicle **100** around its front-rear axis. A pitch angle θ_{P} represents the amount of rotation of the work vehicle **100** around its right-left axis. A yaw angle θ_{Y} represents the amount of rotation of the work vehicle **100** around its top-bottom axis. The attitude may be defined by an Euler angle or other angles, or a quaternion. The controller **180** acquires information concerning the attitude of the work vehicle **100** based on data that is output from the IMU **115,** for example.

Now, specific examples of the recording start condition and the recording end condition will be described. Each of the recording start condition and the recording end condition stipulates satisfying all of any two or more conditions that are described as specific examples below. Hereinafter, together with the specific examples of the respective conditions, examples of processing to be performed by the controller **180** will be described.

The recording start condition and/or the recording end condition may include that "the work vehicle **100** is stopped". That "the work vehicle **100** is stopped" is synonymous to that "the work vehicle **100** has zero speed". By including this condition, reproducibility of the operation of the work vehicle **100** in the reproducing mode can be enhanced. Based on sensor data that is output from a vehicle speed sensor such as the axle sensor 156 and the gear ratio sensor **159** that detects information of the gear ratio of the transmission **103,** the controller **180** acquires any one or more of information of the speed of the work vehicle **100,** information of the engine speed of the work vehicle **100,** and information of the gear ratio of the transmission **103.** The controller **180** may acquire information of the speed of the work vehicle **100** based on sensor data that is output from the IMU **115.** Based on the acquired information, the controller **180** determines whether the work vehicle **100** is stopped or not. The controller **180** may acquire information of the speed of the work vehicle **100** by acquiring information of rate of change in the position of the work vehicle **100** per unit time based on position data that is output from the positioning device **110.**

The recording start condition and/or the recording end condition may include that "the prime mover **102** of the work vehicle **100** is working". By including the above condition, recording of position data in the recording mode can be smoothly performed, and reproducibility of the operation of the work vehicle **100** in the reproducing mode can be enhanced. Based on sensor data that is output from the engine speed sensor **158,** for example, the controller **180** determines whether the prime mover **102** is working or not.

The recording start condition and/or the recording end condition may include that "the roll angle of the work vehicle **100** has a predetermined value or below" and/or that "the pitch angle of the work vehicle **100** has a predetermined value or below". The tilt angle (roll angle and/or pitch angle) of the work vehicle **100** being too large is undesirable for carrying out reproduction in the reproducing mode. By including this condition, reproducibility of the operation of the work vehicle **100** in the reproducing mode can be enhanced. Based on sensor data that is output from the IMU 115, the controller **180** acquires information of the attitude of the work vehicle **100,** and based on the acquired information, determines whether or not the tilt angle of the work vehicle **100** has a predetermined value or below.

The recording start condition and/or the recording end condition may include that "reception of satellite signals by the positioning device **110** is sufficient". That "reception of satellite signals by the positioning device **110** is sufficient" includes that "reception problems do not exist regarding satellite signals for the positioning device **110",** for example. A "reception problem for satellite signals" refers to a state where poorer reception of satellite signals has resulted in a lower positioning reliability than at normal times. In such a state, the reliability of position data that is output from the positioning device **110** may deteriorate, which is not suitable for recording of position data. A reception problem may occur when the number of detected satellites is small (e.g., three or fewer), when the reception intensity for each satellite signal is low, or when multipath exists, for example. The controller **180** can determine the presence/absence of reception problems based on information concerning satellites that is included in GNSS data, for example. For example, the presence/absence of reception problems can be determined based on the satellite-by-satellite value of reception intensity included in GNSS data or a value indicating DOP (Dilution of Precision) of deployment status of satellites, etc.

The recording start condition and/or the recording end condition may include that "the traveling mode of the work vehicle **100** is a predetermined traveling mode". For example, the recording start condition and/or the recording end condition may stipulate a traveling mode that is suitable for self-traveling in the reproducing mode, whereby reproducibility of the operation of the work vehicle **100** in the reproducing mode can be enhanced. Depending on the path for which to generate path data (e.g., depending on whether the path is outside the field or inside the field), the "predetermined traveling mode" may vary.

For example, in a case the aforementioned bi-speed turn mode can be switched ON or OFF as a traveling mode for the where work vehicle **100,** the "predetermined traveling mode" includes the bi-speed turn mode being OFF, for example. In the case of generating path data for a path outside the field, it is preferable that the bi-speed turn mode is OFF, from the standpoint of achieving smooth self-traveling of the work vehicle **100** outside the field in the reproducing mode.

For example, in a case where the aforementioned automatic single brake mode is switchable between ON and OFF as a traveling mode for the work vehicle **100,** the "predetermined traveling mode" includes the automatic single brake mode being OFF, for example. In the case of generating path data for a path outside the field, it is preferable that the automatic single brake mode is OFF, from the standpoint of achieving smooth self-traveling of the work vehicle **100** outside the field in the reproducing mode.

In the case of generating path data for a path interconnecting fields in the recording mode, the recording start condition may include that "the work vehicle **100** is in a predetermined region within the pre-move field". The recording end condition may include that "the work vehicle **100** is in a predetermined region within a post-move field". For example, as in the example of FIG. **5A****,** the recording start condition may include that the start point of the path is in the predetermined region **71a** that is predefined within the pre-move field (first field) **70a.** The recording end condition may include that the end point of the path is in the predetermined region **71b** that is predefined within the post-move field (second field) **70b.** The predetermined region **71a, 71b** is set by the user, for example. By setting the start point and/or the end point of the path for which to generate path data within a predetermined region(s), it becomes possible to generate path data in accordance with the needs that call for performing self-traveling in the reproducing mode.

Information of the predetermined region **71a, 71b** is recorded in a storage device that is accessible to the controller **180,** for example. The controller **180** determines whether the work vehicle **100** is in the predetermined region **71a** within a pre-move field or whether the work vehicle **100** is in the predetermined region **71b** within a pre-move field based on position data that is output from the positioning device **110** and information of the predetermined region **71a, 71b.**

In a case where the work vehicle **100** has the implement **300** linked thereto, the recording start condition and/or the recording end condition may include that "rotation of the PTO shaft is OFF" and/or that "height of the three-point hitch has a predetermined value or above". For example, in the case of generating path data for a path interconnecting fields in the recording mode, including the aforementioned condition(s) in the recording start condition and/or the recording end condition allows smooth self-traveling to be performed outside the field in the reproducing mode.

The linkage device **108** for connecting the implement **300** includes a PTO shaft to supply rotation-based motive power to the implement **300** and a three-point hitch to adjust the height of the implement **300.** The sensor group **150** includes a PTO sensor to detect rotation ON/OFF of the PTO shaft and a 3P position sensor to detect the height position of the three-point hitch. Based on sensor data that is output from the PTO sensor, the controller **180** acquires information concerning rotation ON or OFF of the PTO shaft, and determines whether rotation of the PTO shaft is OFF or not. Based on sensor data that is output from the 3P position sensor, the controller **180** acquires information concerning the height of the three-point hitch, and determines whether the height of the three-point hitch has a predetermined value or above.

Travel control systems according to example embodiments of the present invention are not limited to what has been illustrated. For instance, although the above-described example illustrates a case where path data is generated with respect to paths interconnecting fields, this is not a limitation. For example, path data may be generated with respect to paths along which the work vehicle travels within a field. Path data may be generated with respect to paths along which the work vehicle travels within a field while performing work by using an implement.

The travel control systems according to the above example embodiments may be mounted to work vehicles lacking such functionality as an add-on. Such a control system may be manufactured and marketed independently from the work vehicle. A computer program for use in such a control system may also be manufactured and marketed independently from the work vehicle. The computer program may be provided in a form stored in a computer-readable, non-transitory storage medium, for example. The computer program may also be provided through downloading via telecommunication lines (e.g., the Internet).

The travel control systems according to example embodiments of the present invention are broadly applicable to various kinds of work vehicles for use in smart agriculture.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A travel control system for a work vehicle (100), comprising:
a positioning device (110) to output position data concerning a position of the work vehicle; and
a controller (180) configured or programmed to:
control operation of the work vehicle;
operate in a recording mode to record to a storage device (170) the position data as acquired while the work vehicle travels;
operate in a reproducing mode to cause the work vehicle to travel via self-driving by controlling speed and steering of the work vehicle based on the position data recorded in the storage device; and
when a manipulation for beginning recording of the position data to the storage device is performed, determine whether a start condition for beginning recording of the position data is satisfied or not, the start condition stipulating that all of a plurality of conditions are satisfied, and cause a notifier to output a notification as to whether the start condition is satisfied or not.

2. The travel control system of claim 1, wherein the notification includes a first notification indicating, when the start condition is determined as satisfied, that the start condition is satisfied.

3. The travel control system of claim 1 or 2, wherein the notification includes a second notification indicating, when the start condition is determined as not satisfied, a condition among the plurality of conditions that is unsatisfied.

4. The travel control system of claim 3, wherein
the notifier includes a display device to display the notification; and
the controller (180) is configured or programmed to, after causing the second notification to be displayed on the display device, erase the second notification when the unsatisfied condition becomes satisfied.

5. The travel control system of any one of claims 1 to 4, wherein the notification includes a third notification indicating, when the start condition is determined as not satisfied, a manipulation to be performed in order to satisfy a condition among the plurality of conditions that is unsatisfied.

6. The travel control system of claim 5, wherein
the notifier includes a display device to display the notification; and
the controller (180) is configured or programmed to, after causing the third notification to be displayed on the display device, erase the third notification when the unsatisfied condition becomes satisfied.

7. The travel control system of any one of claims 1 to 6, wherein the plurality of conditions include any two or more of:
that a roll angle of the work vehicle (100) has a predetermined value or below;
that a pitch angle of the work vehicle has a predetermined value or below;
that the work vehicle is stopped;
that a prime mover (102) of the work vehicle is working; and
that reception of a satellite signal by the positioning device (110) is sufficient.

8. The travel control system of any one of claims 1 to 7, wherein the plurality of conditions include that the work vehicle (100) is in a predetermined traveling mode.

9. The travel control system of any one of claims 1 to 8, wherein
in the recording mode, the work vehicle (100) travels along a path connecting a first field and a second field;
the notifier includes a display device to display the notification; and
the controller (180) is configured or programmed to, prior to the recording mode, cause the display device to display a graphical user interface (GUI) configured to allow a user to set the first field and the second field.

10. The travel control system of claim 9, wherein the plurality of conditions include that the work vehicle (100) is in a predetermined region within the first field.

11. The travel control system of any one of claims 1 to 10, wherein
the work vehicle (100) has an implement (300) linked thereto;
the work vehicle includes a linkage device (108) to connect the implement;
the linkage device includes a PTO shaft to supply motive power to the implement and a three-point hitch to adjust a height of the implement; and
the plurality of conditions include one or more of:
that rotation of the PTO shaft is OFF; and
that a height of the three-point hitch has a predetermined value or above.

12. The travel control system of any one of claims 1 to 11, wherein the controller (180) is configured or programmed to, when a manipulation for ending the recording mode is performed by a user, determine whether an end condition for ending the recording mode is satisfied or not, the end condition stipulating that all of a plurality of conditions are satisfied, and cause the notifier to output another notification as to whether the end condition is satisfied or not.

13. The travel control system of claim 12, wherein the another notification includes a fourth notification indicating, when the end condition is determined as satisfied, that the end condition is satisfied.

14. The travel control system of claim 12 or 13, wherein the another notification includes a fifth notification indicating, when the end condition is determined as not satisfied, a condition among the plurality of conditions defining the end condition that is unsatisfied.

15. The travel control system of claim 14, wherein
the notifier includes a display device to display the notification;
the controller (180) is configured or programmed to, after causing the fifth notification to be displayed on the display device, erase the fifth notification when the unsatisfied condition becomes satisfied.

16. The travel control system of any one of claims 12 to 15, wherein the another notification includes a sixth notification indicating, when the end condition is determined as not satisfied, a manipulation to be performed in order to satisfy a condition among the plurality of conditions defining the end condition that is unsatisfied.

17. The travel control system of claim 16, wherein
the notifier includes a display device to display the notification,
the controller (180) is configured or programmed to, after causing the sixth notification to be displayed on the display device, erase the sixth notification when the unsatisfied condition becomes satisfied.

18. A work vehicle (100) comprising:
the travel control system of any one of claims 1 to 17;
a travel device (104) including a wheel responsible for steering; and
a driver to drive the travel device; wherein
in the reproducing mode, the controller (180) is configured or programmed to cause the work vehicle to travel via self-driving by controlling the driver based on the position data recorded in the storage device.

19. A method of travel control for a work vehicle (100), to be executed by a controller (180) configured or programmed to control operation of the work vehicle and operate in a recording mode and a reproducing mode, the method comprising:
in the recording mode, recording position data concerning a position of the work vehicle as acquired while the work vehicle travels to a storage device (170);
in the reproducing mode, causing the work vehicle to travel via self-driving by controlling speed and steering of the work vehicle based on the position data recorded in the storage device; and
when a manipulation for beginning recording of the position data to the storage device is performed, determining whether a start condition for beginning recording of the position data is satisfied or not, the start condition stipulating that all of a plurality of conditions are satisfied, and causing a notifier to output a notification as to whether the start condition is satisfied or not.

20. A non-transitory computer-readable medium including a computer program to be executed by a processor in a controller (180) configured or programmed to control operation of a work vehicle (100) and operate in a recording mode and a reproducing mode, the computer program is executable to cause the processor to perform:
in the recording mode, recording position data concerning a position of the work vehicle as acquired while the work vehicle travels to a storage device (170);
in the reproducing mode, causing the work vehicle to travel via self-driving by controlling speed and steering of the work vehicle based on the position data recorded in the storage device; and,
when a manipulation for beginning recording of the position data to the storage device is performed, determining whether a start condition for beginning recording of the position data is satisfied or not, the start condition stipulating that all of a plurality of conditions are satisfied, and causing a notifier to output a notification as to whether the start condition is satisfied or not.
